(19) Europäisches Patentamt
European Patent Office
Office européen des brevets

(11)  **EP 1 311 829 B1**

(12)  **EUROPÄISCHE PATENTSCHRIFT**

(45) Veröffentlichungstag und Bekanntmachung des Hinweises auf die Patenterteilung:
**02.07.2008 Patentblatt 2008/27**

(21) Anmeldenummer: **01960695.3**

(22) Anmeldetag: **22.08.2001**

(51) Int Cl.:
*G01N 21/64* *(2006.01)*

(86) Internationale Anmeldenummer:
**PCT/EP2001/009680**

(87) Internationale Veröffentlichungsnummer:
**WO 2002/016911 (28.02.2002 Gazette 2002/09)**

(54) **VERFAHREN UND VORRICHTUNG ZUM MESSEN CHEMISCHER UND/ODER BIOLOGISCHER PROBEN**

METHOD AND DEVICE FOR THE MEASUREMENT OF CHEMICAL AND/OR BIOLOGICAL SAMPLES

PROCEDE ET DISPOSITIF DE MESURE D'ECHANTILLONS CHIMIQUES ET/OU BIOLOGIQUES

(84) Benannte Vertragsstaaten:
**AT BE CH CY DE DK ES FI FR GB GR IE IT LI LU MC NL PT SE TR**

(30) Priorität: **22.08.2000 DE 10040988**
**19.01.2001 DE 10102218**

(43) Veröffentlichungstag der Anmeldung:
**21.05.2003 Patentblatt 2003/21**

(73) Patentinhaber:
- **Evotec AG**
  **22525 Hamburg (DE)**
- **Max-Planck-Gesellschaft zur Förderung der Wissenschaften e.V.**
  **80539 München (DE)**

(72) Erfinder:
- **GÜNTHER, Rolf**
  **20359 Hamburg (DE)**
- **BRAND, Leif**
  **25436 Tornesch (DE)**
- **EGGELING, Christian**
  **22761 Hamburg (DE)**
- **GALL, Karsten**
  **27616 Lunestedt (DE)**
- **SEIDEL, Claus**
  **37085 Göttingen (DE)**

(74) Vertreter: **von Kirschbaum, Alexander et al**
**Postfach 10 22 41**
**50462 Köln (DE)**

(56) Entgegenhaltungen:
WO-A-94/16313          WO-A-96/27798
DE-A- 19 634 873       DE-A- 19 718 016
US-A- 5 784 157

- **ZANDER C ET AL: "DETECTION AND CHARACTERIZATION OF SINGLE MOLECULES IN AQUEOUS SOLUTION" APPLIED PHYSICS B: LASERS AND OPTICS, SPRINGER INTERNATIONAL, BERLIN, DE, Bd. B63, Nr. 5, 1996, Seiten 517-523, XP002066657 ISSN: 0946-2171**

EP 1 311 829 B1

## Beschreibung

Die Erfindung betrifft ein Verfahren zum Messen chemischer und/oder biologischer Proben insbesondere mit Hilfe der Lumineszenz-Spektroskopie.

Als Meßverfahren für derartige Proben ist das Screening der Proben bekannt. Beim Screening wird die Wechselwirkung zwischen zwei Biomolekülen in Gegenwart einer Testsubstanz untersucht. Bei den Biomolekülen kann es sich beispielsweise um die Paare Ligand-Rezeptor, Substrat-Enzym, Protein-Protein oder Protein-DNA handeln. Dabei kann ein meßbares Signal entweder von den Biomolekülen selbst erzeugt werden, oder es müssen, wie in den meisten Fällen, Probenmarker an die Biomoleküle gebunden werden. Als Marker werden Stoffe eingesetzt, die Signale auf der Grundlage von Radioaktivität, Lumineszenz oder Absorption erzeugen. Bei der Verwendung von Farbstoffmarkern, die eine Lumineszenz erzeugen, werden die Farbstoffmarker durch elektromagnetische Strahlung, z.B. geeignetes Laserlicht, angeregt, so dass durch die elektromagnetische Strahlung ein Elektron auf ein höheres Energieniveau gehoben wird und der Farbstoffmarker durch Rückkehr des Elektrons auf das ursprüngliche Energieniveau Licht abgibt, d.h. luminesziert. Die Wahrscheinlichkeit der Rückkehr des Elektrons in das ursprüngliche Energieniveau und damit die Lumineszenzemission ist zeitlich exponentiell verteilt. Die mittlere Lebensdauer des angeregten Zustandes wird daher auch als Lumineszenzlebensdauer bezeichnet. Da lumineszierende Marker in den meisten Fällen nur geringfügigen Einfluß auf die Wechselwirkungen der Biomoleküle haben und im Vergleich zu anderen bekannten Markern äußerst empfindlich sind, ist der Einsatz von lumineszierenden Farbstoffmarkern besonders vorteilhaft. Die Informationen über eine Reaktion zwischen den beiden Biomolekülen werden dadurch erhalten, dass die Veränderung des von den Farbstoffmarkern emittierten Lichts in Relation zu der Reaktion der Biomoleküle gesetzt wird.

In einem Beispiel eines Meßverfahrens wird ein Targetmolekül zuerst einem fluoreszierenden Reagenz als lumineszierendem Reagenz ausgesetzt, das die Fähigkeit hat, an das Targetmolekül zu binden. Ändert sich bei der Bindung beispielsweise die Fluoreszenzintensität, so kann sie zur Quantifizierung der Bindung verwendet werden. In einem weiteren Experiment wird das Target sowohl dem fluoreszenzmarkierten Reagenz als auch einer einzelnen Substanz ausgesetzt. Wenn eine Bindung zwischen der Substanz und dem Target entsteht, wird das fluoreszenzmarkierte Reagenz durch die Substanz von dem Target getrennt. Hierdurch ändert sich das Verhältnis von gebundenen zu freien markierten Molekülen. Dies hat wiederum eine Veränderung der Fluoreszenzemission der Probe zur Folge und es kann ermittelt werden, ob und inwieweit sich eine Substanz an ein Target bindet.

Zur Erhöhung der während einer Messung zu erhaltenden Information können mehrere Marker, insbesondere zwei Farbstoffmarker, verwendet werden. In Abhängigkeit von der Anregungsenergie der zwei Farbstoffmarker werden zum Anregen der Farbstoffmarker zwei elektromagnetische Strahlungsquellen, z.B. Laser, unterschiedlicher Wellenlängen eingesetzt. Beispielsweise wird ein roter und ein grüner Farbstoffmarker in Kombination mit einem roten und einem grünen Laser eingesetzt. Bei der Verwendung von roten und grünen Farbstoffmarkern wurde festgestellt, dass die Intensität des von dem roten Farbstoffmarker abgegebenen Lichts bei Verwendung eines roten zusammen mit einem grünen Laser geringer ist als die Intensität des roten Farbstoffmarkers, wenn dieser ausschließlich mit rotem Laserlicht bestrahlt wird. Dieser Intensitätsverlust bringt einen Informationsverlust mit sich und führt zu verfälschten Ergebnissen.

Dieses Phänomen kann auch bei der Verwendung von Farbstoffmarkern anderer Farben festgestellt werden.

Aus WO 94/16313 ist ein Verfahren zur Identifizierung von Molekülen bekannt. Hierzu ist beschrieben, dass mindestens zwei unabhängige und unterschiedliche Farbstoffe mit Licht unterschiedlicher Wellenlänge angeregt werden. Ebenso kann ein Registrieren mit Hilfe von Licht unterschiedlicher Emulsionswellenlänge unabhängig voneinander erfolgen.

In US 5,748,157 ist ferner ein Verfahren zur Identifizierung von Fluorophoren beschrieben. Zur Anregung wird eine Zeit-Intensitäts- modellierte Fluoreszenz und ein wellenlängenspezifisches Schema verwendet. Die Strahlung der unterschiedlichen Wellenlänge wird hierbei moduliert, um die Aussagekraft für die einzelnen Farben zu verbessern. Innerhalb der einzelnen Farben wird ein Pulsieren der Strahlung angewandt, um das Signal zu verbessern.

In WO96/27798 ist schließlich ein Verfahren zum Messen biologischer Proben beschrieben, das die Merkmale des Oberbegriffs von Anspruch 1 aufweist.

Aufgabe der Erfindung ist es, ein Verfahren und eine Vorrichtung zum Messen chemischer und/oder biologischer Proben insbesondere mit Hilfe der Lumineszenz-Spektroskopie bzw. -Mikroskopie zu schaffen, mit dem verbesserte Meßergebnisse erzielt werden können. Insbesondere ist es Aufgabe der Erfindung, eine Verbesserung der Meßergebnisse bei gemeinsam verwendeten roten und grünen Farbstoffmarkern zu erreichen.

Die Lösung der Aufgabe erfolgt erfindungsgemäß durch das Verfahren gemäß Patentanspruch 1 bzw. durch die Verwendung gemäß Patentanspruch 9.

Erfindungsgemäß kann eine Verbesserung der Meßergebnisse dadurch erreicht werden, dass die zur Untersuchung von Proben verwendete elektromagnetische Strahlung zumindest in zwei Wellenlängenbereich gepulst wird. Ferner treffen die Strahlungsimpulse der einzelnen Wellenlängenbereiche zueinander zeitlich versetzt auf die Probe auf. Ein Meßvolumen der mindestens zwei Farbmarker aufweisenden Probe wird mit elektromagnetischer Strahlung mit mindestens zwei unterschiedlichen Wellenlängenbereichen bestrahlt, wobei die Strahlung zumindest in zwei Wellenlängenbereich gepulst ist. Insbesondere kann eine Relativbewegung zwischen Farbstoffmarker und Meßvolumen während eines Relativbewegungszeitraumes vorgesehen werden; in diesem Fall ist es wünschenswert, die Strahlung dergestalt zu pulsen, dass mindestens zwei Strahlungsimpulse pro Relativbewegungszeitraum auf den Farbstoffmarker auftreffen.

Die Pulsung eines oder mehrerer Wellenlängenbereiche erfolgt vorzugsweise derart, dass mindestens zwei Strahlungsimpulse innerhalb eines Diffusionszeitraums des mindestens einen Markers der mindestens zwei Marker durch das Meßvolumen auf den Farbmarker auftreffen. Das Meßvolumen, das beim Hochdurchsatz-Screening vorzugsweise dem Brennpunkt einer Beleuchtungsoptik entspricht, ist vorzugsweise kleiner als $10^{-9}$ 1, insbesondere kleiner als $10^{-12}$ l. Durch das Meßvolumen diffundiert ein mit einem Farbmarker versehener Partikel, beispielsweise ein Molekül. Erfindungsgemäß ist der zeitliche Abstand aufeinanderfolgender Impulse derart gewählt, dass ein durch das Meßvolumen diffundierender Partikel mindestens von zwei Strahlungsimpulsen getroffen und der Farbmarker somit mindestens zweimal zur Lumineszenz angeregt wird. In diesem Fall entspricht der Relativbewegungszeitraum somit dem Diffusionszeitraum des Markers durch das Meßvolumen.

In einer weiteren Ausführungsform kann ein stationärer Marker, z.B. ein markiertes immobilisiertes Makromolekül, eine markierte sedimentierte oder auch adhärente Zelle, etc.) untersucht werden, wobei die Relativbewegung durch eine insbesondere schrittweise Bewegung des Meßvolumens erfolgt. Dieser Scanvorgang kann entweder durch Bewegung der Probe bei festem Anregungsstrahlengang oder durch ein Abtasten der Probe mittels Variation der Position des Anregungsstrahlenganges vorgenommen werden. In diesem Fall entspricht der Relativbewegungszeitraum der Zeit, die benötigt wird, um das Meßvolumen über den Marker hinwegzubewegen bzw. den Marker durch Bewegung der Probe durch das Meßvolumen hindurch zu bewegen. Das Abscannen kann jedoch auch kontinuierlich erfolgen, wobei diese Ausführungsform letztendlich einem schrittweisen Abscannen mit infinitesimal kleinen Schritten entspricht.

Zwischen diesen Extremen sind natürlich jegliche Zwischenformen denkbar, wie z.B. das Abscannen langsam diffundierender Marker oder die Verwendung eines parallelisierten optischen Aufbaus (z.B. durch die Verwendung mehrerer optischer Fasern (eines Faserbündels) zur simultanen Erzeugung mehrerer Meßvolumina.

Übliche Diffusionszeiten von Partikeln durch das Meßvolumen liegen im Bereich von 50 $\mu$s bis 100 ms, insbesondere 2 ms bis 10 ms. Der Abstand aufeinanderfolgender Strahlungsimpulse ist vorzugsweise derart kurz gewählt, dass auch bei diesen kurzen Diffusionszeiträumen die einzelnen Partikel vorzugsweise von mindestens 100 Strahlungsimpulsen getroffen werden. Besonders bevorzugt ist das Auftreffen von mindestens 1.000 und insbesondere mindestens 5.000 Strahlungsimpulsen während des Diffundierens durch das Meßvolumen. Durch die hohe Anzahl an Strahlungsimpulsen werden die Elektronen der Farbmarker mehrfach auf höhere Energieniveaus gehoben und geben somit beim Zurückfallen auf das Ausgangsniveau mehrfach Photonen ab.

Je mehr Licht von dem mit einem Partikel, wie einem Molekül, verbundenen Farbmarker abgegeben wird, um so mehr Informationen können innerhalb des Diffusionszeitraums gewonnen werden.

Hierdurch lässt sich die Aussagekraft der erhaltenen Informationen erhöhen. Entsprechend ist es ebenfalls wünschenswert, während der anderen obengenannten möglichen Relativbewegungszeiträume eine hohe Anzahl an Strahlungsimpulsen vorzusehen. Ein derartiger Strahlungsimpuls kann in einer Ausgestaltung des erfindungsgemäßen Verfahrens aus Subpulsen bestehen, wie sie aus der Mehrphotonen - insbesondere Zweiphotonenanregung - bekannt sind, um eine Lumineszenzemission des Farbmarkers anzuregen.

Bei der Verwendung von beispielsweise elektromagnetischer Strahlung mit beispielsweise zwei unterschiedlichen Wellenlängenbereichen, wie beispielsweise rotem und grünem Laserlicht, strahlt das rote oder grüne Laserlicht kontinuierlich auf die Probe ein und das jeweils andere Laserlicht ist gepulst. Bei Verwenden von rotem und grünem Laserlicht ist vorzugsweise das grüne Laserlicht kontinuierlich und das rote Laserlicht gepulst. Das durch eine gepulste Anregung verursachte Lumineszenzsignal weist einen charakteristischen zeitlichen Verlauf auf, wobei die Intensität nach der Anregung bis zur nächsten Anregung zeitlich abnimmt. Der zeitliche Verlauf einer gepulsten Anregung ist somit zumindest in ausreichender Genauigkeit bekannt. Die Anregung und Emission der durch den anderen Wellenlängenbereich angeregten Farbmarker weisen einen kontinuierlichen Verlauf auf. Die beiden von der Probe abgegebenen Lumineszenzsignale sind somit auf Grund des unterschiedlichen zeitlichen Verlaufs voneinander unterscheidbar.

Es ist somit möglich, die Meßergebnisse durch das Pulsen einer Lichtquelle erheblich zu verbessern. Da beispielsweise beim

Einsatz von zwei Laserlichtquellen Laserlicht unterschiedlicher Wellenlänge emittiert und nur eine der beiden Laserlichtquellen gepulst werden muss, handelt es sich um eine einfache und kostengünstige Veränderung der zur Durchführung des Verfahrens erforderlichen Vorrichtung. Insbesondere ist es vorteilhaft, bei vorstehendem Beispiel den roten Laser zu pulsen, da grüne gepulste Laser heute noch sehr kostenintensiv sind. Im übrigen ist jedoch eine Kombination aller auf die zu untersuchenden Farbmarker abgestimmten Wellenlängen möglich, wobei bevorzugt mindestens zwei unterschiedliche Wellenlängen zwischen 350nm und 800 nm eingesetzt werden. Im übrigen wäre in einer weiteren Ausgestaltung des erfindungsgemäßen Verfahrens beispielsweise auch die Verwendung von UV-Laserdioden möglich. Ein weiterer Vorteil des erfindungsgemäßen Verfahrens besteht darin, dass zur Wahrnehmung der beiden von der Probe abgegebenen Lumineszenzsignale nur ein Detektor erforderlich ist.

Selbstverständlich kann das erfindungsgemäße Verfahren auch bei mehr als zwei unterschiedlichen Wellenlängenbereichen eingesetzt werden. Ebenso ist es möglich, anstelle unterschiedlicher Wellenlängenbereiche unterschiedliche Polarisationen der die Farbstoffmarker anregenden Strahlung zu verwenden. Ebenso kann eine Verbesserung der Meßergebnisse mit vorstehendem erfindungsgemäßem Verfahren erreicht werden, wenn nur ein Farbstoffmarker eingesetzt wird, da dieser beispielsweise durch Strahlung unterschiedlicher Wellenlängenbereiche und/oder unterschiedlicher Polarisationen unterschiedlich angeregt wird und daher unterschiedliche Informationen erhalten werden können.

Die Erfindung beruht u.a. auf der Erkenntnis, dass ein roter Farbstoffmarker, der durch rotes Laserlicht angeregt wurde, von dem grünen Laserlicht photo-zerstört werden kann. Die Photozerstörung wird dadurch hervorgerufen, dass ein Elektron des roten Farbstoffmarkers durch das rote Laserlicht auf ein höheres Energieniveau gehoben wird und von dem grünen Laser weiter angeregt wird. Diese Anregung durch den grünen Laser führt zu einer Erhöhung der Wahrscheinlichkeit der Photozerstörung des roten Farbstoffmarkers, z.B. durch Ionisierung. In den meisten Fällen ist diese Zerstörung irreversibel, d.h. der Farbstoffmarker kann nicht mehr zur Lumineszenzemission angeregt werden und ist für die weitere Messung verloren. Somit kommt es zu einer Verschlechterung des Meßsignals. Dies gilt entsprechend auch für Farbstoffmarker anderer Farben.

Eine weitere erfindungsgemäße Verbesserung des Meßsignals kann in besonders bevorzugter Weise dadurch erreicht werden, dass die zur Untersuchung von Proben verwendete elektromagnetische Strahlung, wie beispielsweise das Laserlicht, gepulst wird und die elektromagnetische Strahlung mindestens zwei unterschiedliche Wellenlängenbereiche aufweist, die zueinander zeitlich versetzt abgegeben werden. Das Pulsen erfolgt hierbei in mindestens zwei Wellenlängenbereichen bzw. Polarisationen. Die elektromagnetische Strahlung unterschiedlicher Wellenlängenbereiche trifft somit nacheinander auf der Probe auf. So ist z.B. die Gefahr der Zerstörung des Farbstoffmarkers dadurch verringert, dass der Strahlungsimpuls, der den Farbstoffmarker zerstören könnte, erst zu einem Zeitpunkt auftrifft, zu dem das angeregte Elektron sich mit hoher Wahrscheinlichkeit bereits wieder in seinem Ausgangszustand befindet.

Durch das Pulsen der elektromagnetischen Strahlung in allen Wellenlängenbereichen können weitere Verbesserungen der Meßergebnisse erreicht werden.

Eine Verbesserung der Meßergebnisse kann durch vorstehendes erfindungsgemäßes Verfahren auch dann erreicht werden, wenn nur ein einzelner Farbstoffmarker in der Probe vorhanden ist. Dieser Farbstoffmarker wird durch die elektromagnetische Strahlung unterschiedlicher Wellenlängenbereiche unterschiedlich angeregt.

Unter Farbstoffmarker/Farbmarker/Marker ist sowohl ein der Probe zugeführter Marker (wie z.B. ein Rhodamin-, Oxazin-, Cyanin- oder sonstiger Farbstoff) als auch ein der zu untersuchenden Substanz inhärenter Marker zu verstehen, d.h.

Substanzen, die bevorzugt lumineszierende Eigenschaften besitzen, wie beispielsweise bestimmte Biopolymere. Unter dem Begriff "Farbstoffmarker/Farbmarker/Marker" werden aber auch sonstige Substanzen verstanden, die mittels spektroskopischer oder mikroskopischer verfahren, wie z.B. Ramanstreuung, untersuchbar sind. Lumineszenz umfasst insbesondere auch Fluoreszenz und Phosphoreszenz.

Der hierin verwendete Begriff "Wellenlängenbereich" umfaßt neben ausgedehnteren Anregungswellenlängenbereichen über typischerweise mehrere Nanometer ebenfalls diskrete Wellenlängen. Insbesondere kann es wünschenswert sein, eine monochromatische Anregung bei mindestens zwei unterschiedlichen Wellenlängen vorzusehen.

Im Folgenden wird die Erfindung anhand der Verwendung elektromagnetischer Strahlung mit unterschiedlichen Wellenlängenbereichen erläutert. Dies erfolgt zum besseren Verständnis anhand des Beispiels eines roten und eines grünen Farbstoffmarkers, die jeweils durch rotes bzw. grünes Laserlicht angeregt werden.

Erfindungsgemäß wird das Laserlicht zur Anregung der Farbstoffmarker, d.h. im erläuterten Beispiel das rote und das grüne Laserlicht, gepulst. Zusätzlich werden die Laserlichtimpulse der einzelnen Wellenlängenbereiche zueinander zeitlich versetzt. Aufgrund des zeitlichen synchronisierten Versatzes der Impulse zueinander trifft zu einem Zeitpunkt stets nur entweder ein roter oder ein grüner Laserlichtimpuls auf die Probe auf. Bereits bei einem äußerst geringen zeitlichen Abstand des grünen Laserlichtimpulses von dem roten Laserlichtimpuls werden erheblich weniger rote Farbstoffmarker photo-zerstört. Dies erhöht die Intensität bzw. die Zählrate des von den Farbstoffmarkern abgegebenen Lichts. Hierdurch können die Meßergebnisse deutlich verbessert werden.

Erfindungsgemäß wird daher bei der Verwendung von roten und grünen Farbstoffmarkern zuerst einer oder mehrere Lichtimpulse des roten Laserlichts und anschließend einer oder mehrere Lichtimpulse des grünen Laserlichts auf die Probe gerichtet. Zwischen dem letzten roten Lichtimpuls und dem ersten grünen Lichtimpuls besteht ein zeitlicher Abstand. Die Zeitspanne ist so gewählt, dass die Anregung der roten Farbstoffmarker im Wesentlichen wieder abgeklungen ist, so dass die Elektronen des roten Farbstoffmarkers durch den grünen Laserlichtimpuls nicht aus einem erhöhten Energieniveau weiter angeregt und die roten Farbstoffmarker dabei photo-zerstört werden können.

Vorzugsweise wird bei dem erfindungsgemäßen Verfahren ein Laserlichtimpuls erst erzeugt, nachdem die Anregung des durch den vorherigen Laserlichtimpuls eines verschiedenen Wellenlängenbereichs angeregten Farbstoffmarkers im Wesentlichen abgeklungen ist. Somit wird beispielsweise der grüne Laserlichtimpuls erst auf die Probe geleitet, wenn die Anregung der durch rote Laserlichtimpulse angeregten Farbstoffmarker im Wesentlichen abgeklungen ist. Vorzugsweise wird der nächste Laserlichtimpuls erst dann auf die Probe abgegeben, wenn die Anregung des zuvor angeregten Farbstoffmarkers um mindestens 90 %, vorzugsweise um mindestens 95 %, besonders bevorzugt um mindestens 98 %, abgeklungen ist. Hierdurch werden die erzielbaren Meßergebnisse erheblich verbessert.

Der notwendige zeitliche Versatz zweier aufeinanderfolgender Lichtimpulse verschiedener Wellenlängenbereiche ist abhängig von der Lumineszenzlebensdauer des verwendeten Farbstoffmarkers. Für einen Farbstoffmarker mit der Lebensdauer 3 ns beträgt der notwendige zeitliche Versatz mindestens 2 ns, vorzugsweise mindestens 7 ns. Bei der Lebensdauer 1 ns beträgt er mindestens 0,7 ns, vorzugsweise mindestens 2,3 ns. Dabei können Pulse mit unterschiedlichen Intensitäten eingesetzt werden, dies gilt auch für nicht-lumineszente Anregungen. Bei Verwendung eines roten und eines grünen Laserlichts ist der Abstand eines auf einen roten Laserlichtimpuls folgenden grünen Laserlichtimpulses maßgebend, da ein zu früh oder gleichzeitig mit dem roten Laserlichtimpuls abgegebener grüner Laserlichtimpuls zur Zerstörung der roten Farbstoffmarker führen kann. Der Abstand eines auf einen grünen Laserlichtimpuls folgenden roten Laserlichtimpulses ist hingegen unerheblich, da der grüne Farbstoffmarker durch den roten Laserlichtimpuls nicht photo-zerstört wird. Es sollte in diesem Fall somit lediglich sichergestellt sein, dass die beiden Impulse nicht gleichzeitig erfolgen.

Die Impulslänge der einzelnen auf das Meßvolumen auftreffenden Strahlungsimpulse ist vorzugsweise kleiner als 1 ns. Insbesondere sind die Strahlungsimpulse kleiner als 500 ps und besonders bevorzugt kleiner als 300 ps. Die Impulslänge hängt insbesondere vom zeitlichen Abstand aufeinanderfolgender Impulse ab. Hierbei soll, wie vorstehend ausgeführt, gemäß der Erfindung sichergestellt sein, dass die Anregung eines Farbstoffmarkers im Wesentlichen wieder abgeklungen ist. Beim Einsatz von modernen Lasern ist es sogar möglich, Impulsbreiten von weniger als 10 ps zu erzielen.

Die Impulsfrequenz des Laserlichts beträgt für Fluoreszenzanregung vorzugsweise 20 - 100 MHz, insbesondere 60 - 80 MHz. Die Impulsfrequenzen der einzelnen Laserlichtbereiche sind hierbei vorzugsweise identisch, so dass die Abstände zwischen aufeinanderfolgenden Laserlichtimpulsen verschiedener Wellenlängenbereiche über die Zeit konstant bleiben.

Die Reihenfolge der auf die Probe abgegebenen Laserlichtimpulse der einzelnen Wellenlängenbereiche bzw. Polarisationen ist vorzugsweise repetierend. Bei der Verwendung von beispielsweise drei Lasern mit unterschiedlichen Wellenlängenbereichen wird somit zuerst von dem ersten, dann von dem zweiten, anschließend von dem dritten und sodann wieder von dem ersten usw. Laser ein Lichtimpuls auf die Probe abgegeben. Bei der Verwendung von zwei Lasern, beispielsweise einem roten und einem grünen Laser, werden die Laserlichtimpulse vorzugsweise abwechselnd erzeugt.

Entsprechend den vorstehend beschriebenen bevorzugten Ausführungsformen der Erfindung anhand der Verwendung von Laserlicht und der erfindungsgemäß erzeugten Laserlichtimpulse wird der gleiche erfindungsgemäße Effekt bei Verwendung anderer elektromagnetischer Strahlen, wie beispielsweise Strahlung im nicht sichtbaren Wellenlängenbereich, hervorgerufen. Entsprechende Strahlungsimpulse rufen denselben erfinderischen Effekt wie Laserlichtimpulse hervor. Ebenso ist es bei den vorstehend beschriebenen Ausführungen möglich, eine Probe mit nur einem Farbstoffmarker zu verwenden. Dieser eine Farbstoffmarker wird durch Strahlungsimpulse unterschiedlicher Wellenlängenbereiche unterschiedlich angeregt, wobei die emittierte Strahlung in Abhängigkeit des Wellenlängenbereichs der anregenden Strahlung unterschiedlich ist oder sein kann.

Es besteht auch die Möglichkeit, verschiedene Impulsfrequenzen gemeinsamer Vielfacher zu verwenden (z.B. 40 MHz und 80 MHz). Es ist dann immer noch ein konstanter zeitlicher Versatz zwischen den beiden Laserlichtimpulsen gewährleistet. Von Vorteil ist dies, wenn einer der beiden Laser, z.B. der rote Laser, leistungsschwächer ist. Da die Intensität der Lumineszenzemission proportional zu der Anregungsleistung ist, kann dann durch eine z.B. um die Hälfte reduzierte Impulsfrequenz des grünen Lasers (z.B. 40 MHz) gegenüber dem roten Laser (z.B. 80 MHz) eine vergleichbare Intensität der Lumineszenzemission des roten und des grünen Farbmarkers erreicht werden. Denn trotz der geringeren Anregungsleistung wird der rote Farbmarker doppelt so oft angeregt. Es ist erfindungsgemäß insbesondere auch möglich, Ramanstreuung statt Lumineszenzeffekte (Lumineszenzspektroskopie sowie -mikroskopie) zur Detektion zu verwenden. In diesem Fall können wegen der instantanen Emission der Ramanphotonen Anregungsquellen besonders hoher Repititionsraten verwendet werden. Dabei ist es insbesondere vorteilhaft, oberflächenverstärkte Ramanemission zu nutzen, da hier der Wirkungsquerschnitt und damit die Anzahl der emittierten Photonen besonders hoch ist. Dabei können die üblichen Verfahren zur Nutzung der oberflächenverstärkten Ramanemission Anwendung finden, wie beispielsweise Metallisierung von Oberflächen beispielsweise mit Silber, insbesondere von Partikeloberflächen.

Das erfindungsgemäße Verfahren unter Einsatz von zwei oder mehr gepulsten elektromagnetischen Strahlen unterschiedlicher Wellenlängenbereiche bietet eine Vielzahl von Anwendungsmöglichkeiten im Bereich der Transienten-Spektroskopie, wie beispielsweise der Transienten-Absorptions-Spektroskopie (TRABS). Beispielsweise ist eine spezielle Anwendung zum Multiplexen über verschiedene Farbmarker mit dem erfindungsgemäßen Verfahren möglich. Beispielsweise werden beim Verwenden von zwei gepulsten Laserlichtquellen sämtliche Farbmarker durch den ersten Laserlichtimpuls angeregt. Der zweite, zeitlich versetzte Laserlichtimpuls sättigt oder photozerstört selektiv bestimmte Farbmarker oder fluoreszente Verunreinigungen. Hierdurch kann eine kontrollierte Erniedrigung von Fluoreszenzsignalen erreicht werden und es können bestimmte Farbmarker bevorzugt oder unterscheidbar gemacht werden. Es ist möglich, anstelle von Zeitimpulsen mit unterschiedlichen Wellenlängenbereichen auch mehrere zeitlich zueinander versetzte Impulse in unterschiedlichen Wellenlängenbereichen einzusetzen, wobei die einzelnen Wellenlängenbereiche derart gewählt sind, dass bestimmte Farbmarker gesättigt oder photozerstört werden.

Entsprechende Ergebnisse wie bei der Verwendung von unterschiedlichen Wellenlängenbereichen können auch durch unterschiedliche Polarisationen der elektromagnetischen Strahlen erreicht werden. So können beispielsweise anstelle eines roten und grünen Lasers entsprechende Meßergebnisse mit senkrecht und parallel polarisiertem Licht erreicht werden, mit denen ebenfalls Aussagen über den untersuchten Stoff getroffen werden können.

Der Wellenlängenbereich eines verwendeten grünen Laserlichts beträgt vorzugsweise 480 - 550 nm, besonders bevorzugt 485 - 535 nm. Der Wellenlängenbereich eines roten Lasers beträgt vorzugsweise 630 - 690 nm, besonders bevorzugt 635 - 655 nm. Als mögliche grüne Laserlichtquellen kommen bevorzugt hochwertige Argonionenlaser mit monochromatischer Anregung bei 488 nm, 496 nm, 502 nm, 515 nm, 528 nm oder Nd:YAG-Laser mit monochromatischer Anregung bei 492 nm oder 532 nm in Frage. Rote Laserlichtquellen sind bevorzugt Kryptonlaser mit monochromomatischer Anregung bei 647 nm, sowie rote Laserdioden, die für verschiedene Anregungswellenlängen erhältlich sind.

Häufig angewendete Methoden unter Benutzung von zwei Farbstoffmarkern mit zwei Lasern unterschiedlicher Farbe sind Koinzidenzanalysen, die hier anhand der Fluoreszenz vorgestellt werden. Dabei kann festgestellt werden, inwieweit die Farbstoffmarker gleichzeitig oder getrennt vorkommen, d.h. inwieweit sie an einem gemeinsamen Reagenz oder an zwei getrennten Reagenzien gebunden sind. Dabei wird ausgenutzt, dass im Fall des gleichzeitigen Vorkommens das Fluoreszenzlicht beider Farben im wesentlichen zur gleichen Zeit detektiert wird, während im Fall des getrennten Vorkommens die Detektion des Fluoreszenzlichts von beiden Farben zeitlich willkürlich verteilt ist. Dies sei wiederum am Beispiel von rot und grün erläutert. Ein spezieller Fall der Koinzidenzanalyse ist die Kreuzkorrelationsanalyse. Hierbei werden die zeitlichen Fluktuationen des Fluoreszenzlichts des einen Farbstoffmarkers, $F_{grün}(t)$, auf einem, die des anderen Farbstoffmarkers, $F_{rot}(t)$, auf einem zweiten Detektor registriert. Die Kreuzkorrelationsfunktion, $G(t_c)$, wird über diese Fluktuationsspuren berechnet.

$$G(t_c) = \frac{<F_{grün}(t)\, F_{rot}(t+t_c)>}{<F_{grün}(t)><F_{rot}(t)>} \qquad \text{Gl. 1}$$

(t: Meßzeit, $t_c$: Korrelationszeit, <...>: Mittelung über t)

Zu einer Kreuzkorrelationsfunktion ungleich Null kommt es nur, wenn die Fluoreszenzlichter der beiden Farbstoffmarker zeitlich verknüpft ("korreliert") sind. Dies ist der Fall, wenn sie an einem gemeinsamen Reagenz gebunden sind. Die Amplitude der Kreuzkorrelationsfunktion, $G(t_c=0)$, läßt eine direkte Aussage über die Konzentration, $c_{grün+rot}$, dieses zweifach farbmarkierten Reagenzes im Vergleich zu den Konzentrationen, $c_{grün}$ und $c_{rot}$, der einfach markierten Reagenzien zu ($c_{grün}$ und $c_{rot}$ können dabei durch andere Analyseverfahren bestimmt werden).

$$G(t_c=0) = \frac{c_{grün+rot}}{(c_{grün}+c_{grün+rot})(c_{rot}+c_{grün+rot})} \qquad \text{Gl. 2}$$

Durch die bereits erwähnte Zerstörung des roten Farbstoffmarkers kommt es zu einer ungewollten Verringerung der Konzentrationen, $c_{grün+rot}$, des zweifach farbmarkierten Reagenzes (und $c_{rot}$, des rot markierten Reagenzes) und damit zu einer Abnahme der Kreuzkorrelationsamplitude, $G(t_c=0)$. Eine Analyse dieser Art eines biologischen Systems durch die Kreuzkorrelation würde in diesem Fall zu verfälschten Ergebnissen führen und die tatsächliche biologische Konzentration des zweifach farbmarkierten Reagenzes, $c_{grün+rot}$, unterschätzen. Daher werden erfindungsgemäß der rote und grüne Laserlichtimpuls zueinander zeitlich verschoben. Durch das Verhindern der Zerstörung des roten Farbstoffmarkers wird dieser nachteilige Einfluß auf die Korrelationsamplitude unterbunden und eine unverfälschte Kreuzkorrelations- oder Koinzidenzanalyse erzielt.

Ein weiteres Problem bei Meßmethoden unter Verwendung von zwei Farbstoffmarkern mit zwei Lasern unterschiedlicher Farbe ist das Übersprechen der Lumineszenzsignale der beiden Farbstoffmarker. Dies soll am Beispiel der Fluoreszenz erläutert werden. Die Absorptions- und Emissionsspektren von Fluoreszenzfarbstoffen sind relativ breit, d.h. sie erstrecken sich über einen relativ großen Wellenlängenbereich, und können sich überlappen. Dadurch kann es zu folgenden Problemen kommen, die keine eindeutige Zuordnung des Fluoreszenzlichts zu einem bestimmten Farbstoffmarker oder Anregungslaser zulassen - z.B. können sie zu Verfälschungen in der Kreuzkorrelationsfunktion führen. Sie seien wiederum an dem Beispiel von rot und grün erläutert:

i) das Fluoreszenzlicht des roten Farbstoffmarkers läßt sich auch (vermindert) durch den grünen Laser anregen - es kommt zu einer Überlagerung zwischen vom grünen und roten Laser angeregten roten Fluoreszenzlicht;

ii) ein (geringer) Teil des Fluoreszenzlichts des grünen Farbstoffmarkers überlappt mit dem roten Fluoreszenzlicht ("crosstalk") - es kommt zu einer Überlagerung zwischen vom grünen und roten Farbstoffmarker emittierten Fluoreszenzlicht auf dem Detektor für die rote Strahlung;

iii) das Fluoreszenzlicht des roten Farbstoffmarkers kann nicht nur von dem roten Laser, sondern auch noch über (Resonanz-Energietransfer) von dem von dem grünen Laser angeregten grünen Farbstoffmarker erzeugt werden - ähnlich wie im Fall i) kommt es zu einer Überlagerung zwischen vom roten und indirekt über Energietransfer vom grünen Laser angeregten roten Fluoreszenzlicht.

Es ist Sinn dieser Erfindung, durch die zeitliche Verschiebung der roten und grünen Laserlichtimpulse zueinander dieses Übersprechen der Fluoreszenzsignale zu unterbinden. Das vom grünen und roten Laser angeregte Fluoreszenzlicht läßt sich dann zeitlich trennen und erlaubt eine eindeutige Zuordnung, wie an den drei Problemfällen erläutert werden kann: Nach dem grünen Laserlichtimpuls erfolgt nur die Detektion des Anteils vom grünen Farbstoffmarker (Unterdrückung des "crosstalk") oder vom direkt oder indirekt über Energietransfer angeregten roten Farbstoffmarker im roten Fluoreszenzlicht. Folgt nach dem Abklingen dieser Fluoreszenz der rote Laserlichtimpuls, so enthält das rote Fluoreszenzlicht nur Anteile von dem direkt durch den roten Laser angeregten roten Farbstoffmarker. Ist wiederum der grüne Laser auf das Abklingen dieser Fluoreszenz zeitlich abgestimmt, so kann das Fluoreszenzlicht eindeutig den Farbstoffmarkern bzw. anregenden Lasern zugeordnet werden. Hierdurch ist z.B. eine unbeeinflußte Kreuzkorrelationsanalyse möglich.

Eine weitere erfindungsgemäße Anwendung der zeitlichen Verschiebung von zwei Laserlichtimpulsen ist die Detektion unterschiedlicher Polarisationen des Lumineszenzlichts - im Folgenden nur auf Fluoreszenzlicht bezogen - eines Farbstoffmarkers, mit nur einem Detektor. In üblichen Meßmethoden zur Aufnahme verschiedener Polarisationen des Fluoreszenzlichts wird der Farbstoffmarker mit einem in einer bestimmten Ebene X polarisierten Laser angeregt und der zu X parallele und senkrechte Polarisationsanteil des Fluoreszenzlichts entweder durch den Einsatz eines Polarisations-Strahlteilers gleichzeitig auf zwei verschiedenen Detektoren oder durch den zeitlichen Wechsel der Transmissionsrichtung eines Polarisationsfilters zeitlich getrennt (mehrere Sekunden) auf einem Detektor registriert. Dadurch können Rückschlüsse auf die Rotationseigenschaften der untersuchten Farbstoffmarker gezogen werden. Sinn dieser Erfindung ist es nun, zeitlich getrennte Fluoreszenzsignalpulse (-abklingpulse) unterschiedlicher Polarisation durch zwei zeitlich getrennte, in der Ebene X und in der dazu senkrechten Ebene Y polarisierte Laserpulse, zu erzeugen (dies ist sogar mit nur einem Laser unter Aufspaltung erreichbar). Erfolgt die Detektion auf einem einzigen Detektor mit einem Polarisationsfilter mit konstanter Transmissionsrichtung, so kann eine vergleichbare Detektion der zu der Polarisationsebene des Lasers parallelen und senkrechten Komponente des Fluoreszenzlichts erfolgen: die Transmissionsrichtung des Polarisationsfilters sei dabei die Ebene X; erfolgt der erste Laserlichtimpuls mit einer Polarisation ebenfalls in der Ebene X, so wird darauffolgend der zu der Polarisationsebene des Lasers parallel polarisierte Anteil des Fluoreszenzlichts detektiert; nach Abklingen dieser Fluoreszenz erfolgt der zweite Laserlichtimpuls mit einer Polarisation in der zur Ebene X senkrechten Ebene Y; darauffolgend wird nur der zu der Polarisationsebene des Lasers senkrecht polarisierte Anteil des Fluoreszenzlichtes detektiert; nach dessen Abklingen wird wieder ein Laserlichtimpuls mit Polarisation in der Ebene X eingestrahlt; usw. Diese Detektion der beiden Polarisationsanteile erfolgt dabei nahezu zeitgleich, da die zeitliche Verzögerung der beiden Laserlichtpulse nur auf das Abklingen des Fluoreszenzlichts, welche im Bereich der Fluoreszenzlebensdauer der Farbstoffmarker, üblicherweise zwischen 1 - 4 ns liegt, begrenzt ist. Diese "zeitgleiche" Detektion der beiden Polarisationen ist damit unter geringem Materialaufwand mit nur einem Detektor und einem Laser erreichbar und so in jeglichen Anwendungen für Fluoreszenz-Anisotropie und -Polarisationsmessungen von großem Interesse.

In ähnlicher Art und Weise kann durch den zeitlichen Versatz von rotem und grünem Laser eine nur um ns zeitversetzte, "zeitgleiche" Detektion von rotem und grünem Lumineszenzsignal auf nur einem Detektor ermöglicht werden.

Durch das erfindungsgemäße Verfahren ist es somit möglich, eine Zwei-Farben-Kreuzkorrelationsanalyse mit nur einem Detektor durchzuführen.

Zur Erzielung besonders guter Meßergebnisse bei der Verwendung unterschiedlicher Wellenlängenbereiche wird vorzugsweise ein hochempfindliches konfokales Mikroskop eingesetzt.

Eine weitere vorteilhafte Einsatzmöglichkeit des erfindungsgemäßen Verfahrens besteht in Analysen unter Verwendung des Fluoreszenz-Resonanz-Energie-Transfers (FRET). Bei FRET-Analysen von chemischen und/oder biologischen Proben wird der Effekt ausgenutzt, dass die Anregungsenergie eines zuvor mit einer bestimmten Wellenlänge angeregten Stoffs (Donor) die Lumineszenz eines anderen Stoffs (Akzeptor) hervorrufen kann. Der Akzeptor wird somit zusätzlich oder ausschließlich durch von dem Donor abgegebene Energie angeregt (Energietransfer). Die Effektivität dieses Energietransfers ist extrem abhängig von dem räumlichen Abstand und der räumlichen Orientierung zwischen Donor und Akzeptor, so dass z.B. Abstandsveränderungen zwischen diesen beiden Stoffen sehr effektiv mit FRET untersucht werden können.

Aufgrund der primären Anregung des Donors wäre es diesem prinzipiell möglich, Lumineszenzlicht abzugeben. Durch den Energietransfer ist dieses jedoch abgeschwächt bzw. nicht mehr vorhanden (gelöscht) und somit nicht detektierbar. Direkte Veränderungen des Donor-Stoffs, die normalerweise direkt durch dessen Lumineszenzlicht aufgedeckt werden können, sind nun nur noch indirekt über Veränderungen in der FRET-Effektivität beobachtbar. Wie bereits angedeutet, hängt diese jedoch noch von anderen Faktoren (wie z.B. Donor-Akzeptor-Abstand) ab. Die Möglichkeit, das Lumineszenzlicht des Donors zusätzlich beobachten zu können, würde eine Unterscheidung der verschiedenen Effekte ermöglichen. Wird bei dem Einsatz des erfindungsgemäßen Verfahrens beispielsweise zunächst eine Probe mit Licht der Akzeptor-Anregungs-Wellenlänge gepulst oder kontinuierlich bestrahlt, so kommt es zu einer Sättigung der entsprechenden Akzeptor-Farbmarker, d.h. zur Anregung von den meisten dieser Farbmarker. Ein Lichtimpuls einer zweiten Wellenlänge (im Fall der Pulsung des Lichts der ersten Wellenlänge zu diesem zeitlich versetzt) führt zur Anregung des Donor-Farbmarkers, der wiederum über FRET indirekt den Akzeptor-Farbmarker anregt. Da bereits viele der Akezeptor-Farbmarker durch das Licht der ersten Wellenlänge angeregt (gesättigt) wurden, ist die FRET-Anregung durch den Donor-Farbmarker geringer. Der erfindungsgemäße Einsatz der Pulsung eines der beiden bzw. des zeitlichen Versatzes der Pulse beider Wellenlängenbereiche hat somit den Vorteil, dass eine geringere Löschung der Lumineszenz des Donor-Farbmarkers erfolgt. Denn es ist vermieden, dass ein großer Teil des Lumineszenzlichts des Donor-Farbmarkers nicht sichtbar ist, weil dessen Anregungsenergie durch die FRET-Anregung des Akzeptor-Farbmarkers aufgebraucht wird. Durch eine geeignete Wahl des Zeitversatzes bzw. der Leistung des Lichts der ersten Wellenlänge wird ein unterschiedliches Ausmaß an Sättigung des Akzeptor-Farbmarkers erreicht und somit eine optimale Unterdrückung der FRET-Löschung bzw. des FRET-Signals eingestellt.

Eine weitere Einsatzmöglichkeit des erfindungsgemäßen Verfahrens besteht in einem verbesserten Einsatz einer FRET-Analyse mittels FRET-Kaskaden. Wie bereits angedeutet, nimmt die Effektivität und damit die Beobachtbarkeit von FRET stark mit der Entfernung zwischen Donor und Akzeptor ab und ist ab einer maximalen Entfernung (üblicherweise ca. 100 nm) verschwunden. Bei FRET-Kaskaden sind mehrere Farbmarker in einer Probe vorgesehen, so dass diese maximal mögliche Entfernung vergrößert werden kann. Beispielsweise wird ein grüner Farbmarker von einem grünen Laser als erster Donor (Donor 1) angeregt. Dieser regt über FRET einen gelben Farbmarker als zweiten Donor (Donor 2) an, der wiederum über eine weitere FRET-Anregung einen dritten, roten Farbmarker als Akzeptor zur Emission von Lumineszenzsignalen anregt. Dadurch können Abstandsveränderungen zwischen Donor 1 und Akzeptor sogar über einen größeren Bereich detektiert werden, da der Energietransfer von Donor 1 zu Akzeptor über den Donor 2 abläuft (FRET-Kaskade) und z.B. zwei Mal der maximale Abstand ausgenutzt werden kann. Ein Nachteil dieser so durchgeführten Methode ist jedoch die Ungewissheit, ob eine Veränderung des Akzeptor-Lumineszenzsignals durch eine Abstands- und somit FRET-Veränderung zwischen Donor 1 und Donor 2 oder eine Abstands- und somit FRET-Veränderung zwischen Donor 2 und Akzeptor hervorgerufen wurde. Durch die Verwendung zweier zeitlich versetzter grüner und gelber gepulster Lichtquellen, die jeweils nur den Donor 1 oder nur den Donor 2 anregen, sind die FRET-Effektivitäten und damit die Abstände zwischen dem Donor 1 und Donor 2 selektiv durch den grünen und zwischen Donor 2 und Akzeptor selektiv durch den gelben Laser analysierbar. Derartige ggf. auch längere FRET-Kaskaden sind somit durch den Einsatz von elektromagnetischer Strahlung, die zumindest in einem Wellenlängenbereich gepulst ist, erheblich verbessert.

In allen genannten Anwendungsmöglichkeiten der Erfindung ist die Möglichkeit zur Variation des zeitlichen Versatzes beider Laserpulse von Vorteil. Auf diese Art und Weise kann ein für die Verbesserung der Messergebnisse (z.B. geringere Photozerstörung, optimalere Kreuzkorrelation, höheres Signal-zu-Hintergrund-Verhältnis) optimaler zeitlicher Versatz gefunden werden. Zudem eröffnet sich die Möglichkeit, durch systematische Untersuchung, d.h. systematische Veränderung des zeitlichen Versatzes in verschiedenen Messungen, die Wechselwirkungen von Prozessen und/oder Zuständen (z.B. Photozerstörung, transiente Absorption, angeregter Zustand des Farbmarkers) zu charakterisieren.

Mit der erfindungsgemäßen Vorrichtung wird in zumindest zwei Wellenlängenbereich gepulste elektromagnetische Strahlung erzeugt. Die Strahlungsimpulse der einzelnen Wellenlängenbereice sind zueinander zeitlich versetz. Die Vorrichtung ist erfindungsgemäß so aufgebaut, dass die Strahlungsimpulse der einzelnen Wellenlängenbereiche zueinander zeitlich versetzt sind. Das Pulsen des mindestens einen Wellenlängenbereichs erfolgt bevorzugt derart, dass mindestens zwei Strahlungsimpulse innerhalb des Diffusionszeitraums, in dem ein Farbstoffmarker durch ein Meßvolumen diffundiert, auf den Farbstoffmarker auftreffen. Entsprechendes gilt für die anderen anhand des Verfahrens oben beschriebenen Relativbewegungszeiträume. Die Anzahl der Impulse sowie deren Länge entspricht vorzugsweise den vorstehend anhand des Verfahrens beschriebenen Größen. Eine derartige Vorrichtung weist eine Strahlungseinheit, eine Probenaufnahme, eine Detektoreinheit und mindestens eine Optikeinheit auf.

Die Probenaufnahme dient zur Aufnahme einer chemischen und/oder biologischen Probe, die zur Durchführung von Lumineszenz-Spektroskopie mindestens einen Farbstoffmarker aufweist.

Die Detektoreinheit dient zum Detektieren der von der Probe abgegebenen Strahlung. Mit Hilfe der Optikeinheiten wird die Strahlung von der Strahlungseinheit zur Probenaufnahme und/oder die von der Probe abgegebene Strahlung zur Detektoreinheit geleitet.

Die erfindungsgemäße Vorrichtung kann so ausgestaltet sein, dass das Licht von der Strahlungseinheit zur Probenaufnahme und die von der Probe abgegebene Strahlung unter Verwendung derselben Optikeinheit zur Detektoreinheit geleitet wird, wobei sich diese ober- oder unterhalb der Probenaufnahme befinden kann. Es ist ferner möglich, dass die Vorrichtung so ausgestaltet ist, dass das Licht von der Strahlungseinheit durch eine Optikeinheit zur Probenaufnahme geleitet wird, die sich oberhalb der Probenaufnahme befindet und die von der Probe abgegebene Strahlung unter Verwendung einer weiteren Optikeinheit zur Detektoreinheit geleitet wird, die sich unterhalb der Probenaufnahme befindet.

Die erfindungsgemäß ausgestaltete Strahlungseinheit erzeugt Strahlung in mindestens zwei verschiedenen Wellenlängenbereichen. Vorzugsweise wird eine Lasereinheit als Strahlungseinheit verwendet. Dabei werden zwei oder mehr Laser eingesetzt, die jeweils Laserlicht eines anderen Wellenlängenbereichs erzeugen und von denen mindestens einer gepulst betrieben wird. Die Laserlichtimpulse der einzelnen Wellenlängenbereiche sind zueinander zeitlich versetzt, sofern wie bevorzugt eine Pulsung beider Wellenlängenbereiche bzw. Polarisationen erfolgt. Hierdurch wird, wie vorstehend anhand des erfindungsgemäßen Verfahrens beschrieben, ein erheblich besseres Meßergebnis erzielt.

Vorzugsweise weist die Lasereinheit eine Steuereinheit auf, die mit dem einen bzw. mit sämtlichen Lasern verbunden ist. Hierbei kann für jeden einzelnen Laser eine separate Steuereinheit vorgesehen sein, wobei die einzelnen Steuereinheiten über eine gemeinsame Steuerung miteinander verknüpft werden. Vorzugsweise ist eine einzige Steuereinheit wie ein erster Modenkoppler für sämtliche in der Lasereinheit angeordneten Laser vorgesehen. Mit Hilfe dieser einen Steuereinheit wird ein erster Laser gesteuert. Der zweite und jeder weitere Laser ist vorzugsweise mit der einzigen Steuereinheit über ein Triggerkabel verbunden. Aufgrund der Signallaufzeiten, die von der Länge des Triggerkabels abhängig sind, können die Laserlichtimpulse des zweiten und jedes weiteren Lasers automatisch zu denjenigen des ersten Lasers zeitlich versetzt werden. Andere praktische Möglichkeiten, um den zeitlichen Versatz der Laser zu erreichen, sind Weglängenunterschiede der verschiedenen Strahlengänge oder andere elektrische Bauteile zur Veränderung der Signallaufzeiten.

Die Steuereinheit der erfindungsgemäßen Vorrichtung kann vorzugsweise wie vorstehend anhand des erfindungsgemäßen Verfahrens beschrieben ausgebildet sein, so dass beispielsweise ein Laserlichtimpuls erst dann die Probe erreicht, wenn die Anregung des durch den vorherigen Laserlichtimpuls eines verschiedenen Wellenlängenbereichs angeregten Farbstoffmarkers im Wesentlichen abgeklungen ist. Ferner können durch die Steuereinheit die Reihenfolge der einzelnen Laser sowie die zeitlichen Abstände zwischen den Laserlichtimpulsen gesteuert werden.

Bei einer bevorzugten Weiterbildung der Detektoreinheit weist die Detektoreinheit nur einen mit einer Auswerteeinheit verbundenen Kombinationsdetektor auf. Dieser einzelne Detektor nimmt sämtliche von den einzelnen in der Probe enthaltenen Farbstoffmarkern abgegebenen Lumineszenz-Lichtimpulse auf. Da die Lumineszenz-Lichtimpulse aufgrund des zeitlichen Versatzes der die Farbstoffmarker anregenden Strahlungsimpulse auch zeitlich versetzt am Detektor ankommen, können die einzelnen detektierten Werte mittels der Auswerteeinheit den entsprechenden Farbstoffmarkern, von denen sie stammen, zugeordnet werden. Durch die Kombination der Informationen über die Abfolge der Strahlungsimpulse und die Abfolge der Detektorsignale in der Auswerteeinheit ist eine Sortierung in rote und grüne Signale möglich.

Bei einer anderen bevorzugten Ausführungsform weist die Detektoreinheit zwei Detektoren auf, wobei ein Detektor zum Detektieren des von den roten Farbstoffmarkern abgegebenen Lichts und der andere zum Detektieren des von den grünen Farbstoffmarkern abgegebenen Lichts vorgesehen ist. Hierdurch ist sichergestellt, dass keine Verfälschung der Ergebnisse aufgrund von Fehlern der Auswerteeinheit stattfindet. Ferner kann die Auswerteeinheit einfacher aufgebaut sein. Bei Vorsehen von drei oder mehr Farbstoffmarkern kann dementsprechend die entsprechende Anzahl von Detektoren vorgesehen werden.

Um zusätzliche Informationen zu erhalten, kann den Detektoren ein polarisierender Strahlteiler vorgeschaltet sein. Ein von einem bestimmten Farbstoffmarker kommender Lichtstrahl wird somit in zwei Strahlen unterschiedlicher Polarisation aufgeteilt. Diesen beiden Strahlen können zusätzliche Informationen, z. B. Rotationseigenschaften, über die Probe entnommen werden. Insbesondere kann jeder dieser Detektoren nach dem o.g. Verfahren verschiedene Farben nacheinander messen. So ist es möglich, mit zwei Detektoren mehr als eine Farbe in beiden Polarisationen zu messen.

Durch das Gating, d.h. das synchrone Ausschalten des Detektors während eines Laserpulses, kann es zu einer weiteren Verbesserung der Messmethode kommen. Neben der bereits bekannten Unterdrückung von promptem Streulicht und damit einer Erhöhung des Signal-zu-Hintergrund-Verhältnisses, kann so die Detektion der Lumineszenzemission, die durch einen Laserpuls erzeugt wurde, spezifisch unterdrückt werden. Bei dem Einsatz von mehreren gepulsten Lasern unterschiedlicher Wellenlängenbereiche eröffnet dies die spezifische Untersuchung von transienten Zuständen und Prozessen.

Die Vorrichtung ist vorzugsweise als hochgenaues konfokales Mikroskop ausgestaltet. Die Detektionseinheit weist vorzugsweise eine Elektronik auf, mit der z.B. eine Kreuzkorrelationsmessung durchgeführt werden kann. Die Verwendung eines konfokalen optischen Aufbaus ist nicht zuletzt aufgrund der hohen Auflösung in Z-Richtung, d.h. entlang der optischen Achse, und dem guten Signal-RauschVerhältnis bevorzugt. Dennoch lassen sich auch jegliche nicht-konfokale optische Meßsysteme zur Durchführung des erfindungsgemäßen Verfahrens verwenden.

Die erfindungsgemäße Vorrichtung ist, wie anhand des vorstehend beschriebenen Verfahrens beschrieben, insbesondere durch die geeignete Strahlungseinrichtung vorteilhaft weitergebildet.

Durch das Einkoppeln zweier zeitlich versetzter Strahlungsimpulse unterschiedlicher Wellenlängenbereiche, z.B. rot und grün, und der Verwendung geeigneter optischer Filter kann Lumineszenzlicht unterschiedlicher Wellenlängenbereiche, z.B. rot und grün, mit nur einem Detektor, wie vorher ausgeführt, nahezu "zeitgleich" separat detektiert werden. Es können somit Verfahren, wie die Koinzidenzanalyse oder die Zwei-Farben-Kreuzkorrelationsmessung, mit einem einzigen Detektor durchgeführt werden. Dies ist nach dem Stand der Technik nicht möglich.

Mit dem erfindungsgemäßen Verfahren sowie der erfindungsgemäßen Vorrichtung können insbesondere folgende Meßverfahren durchgeführt werden: Spektrometrie, Mehrphotonenanregung (z.B. im Zwei-Photonen-Betrieb), Laser-Scanning-Anregung, Nahfeldspektroskopie, Raman- und Rayleigh-Streulicht-Anwendungen, FIDA- (fluorescence intensity distribution analysis) Anwendungen, zweidimensionale FIDA-Anwendungen, Koinzidenzanalyse und Fluoreszenz-Lebensdauer-Messungen. Es können auch parallele konfokale Systeme, wie Nipkow-Disks, Line-Scanner oder PAM-Anordnungen verwendet werden. Dabei werden vorzugsweise gated CCDs, CIDs, CMOSs oder mehrere CCDs, CIDs oder CMOSs verwendet, die über Farbteiler oder Polarisatoren unterschiedliche Signalanteile messen.

Mit dem erfindungsgemäßen Verfahren können auch Änderungen der Konformation eines Partikels vermessen werden, sofern der Partikel mit mindestens zwei Markern markiert ist und/oder an mindestens zwei Stellen intrinsische Lumineszenz zeigt (intrinsische Marker). Insbesondere ist der Partikel mit genau zwei Molekülen insbesondere an definierten Stellen markiert. Dabei wird die Anregung in alternierender Polarisation durchgeführt. Bei einem Aufbau, der die Detektion von zwei Farben und zwei Polarisationsrichtungen gleichzeitig erlaubt (beispielsweise vier gleichzeitig das Probenvolumen messende Detektoren), kann die Polarisation der beiden verschiedenfarbigen Anregungspulse beliebig zueinander polarisiert sein, solange das Verhältnis der Polarisationsrichtungen zueinander zeitlich konstant ist. Dies schließt auch wechselnde Polarisationsrichtungen mit ein, solange sie periodisch oder zumindest quasiperiodisch erfolgen. Treffen nun Anregungsphotonen in definierter Polarisationsrichtung auf die Marker, so ist die Absorption und damit die Intensität der emittierten Lumineszenz abhängig von der Orientierung der Marker zueinander. Diese Abhängigkeit äußert sich im Verhältnis der jeweils detektierten Polarisationen. Bei schnell rotierenden Partikeln oder Partikelbestandteilen oder Markern ist ein Aufbau mit vier Detektoren bevorzugt, da sonst die Beiträge der beiden Marker vermischt werden. Es ist damit insbesondere möglich, bistabile Zustände molekularer Rotationsachsen zu verfolgen, beispielsweise Cis-Trans-Umlagerungen, oder Sessel-Umlagerungen von Ringstrukturen. Komplexere Anwendungen dieses Verfahrens beinhalten jedoch auch das Aufbrechen oder Entstehen von Cystein-Brücken zwischen Proteineinheiten, oder Faltblatt-Umlagerungen. Insbesondere kann das Detektionssignal von Lumineszenzlebensdauereffeketen überlagert sein, die zusätzlich zur Quantifizierung genutzt werden können. Es kann bevorzugt sein, bei dieser Anwendung die Konzentration der Probe so einzustellen, dass sich im Mittel weniger als ein Partikel in einem Meßvolumen befindet. Es kann auch bevorzugt sein, die Partikel an einer Oberfläche zu fixieren, beispielsweise an der von anderen Partikelen, insbesondere Nanopartikeln, oder auch einer planaren Oberfläche, insbesondere in Form von Arrays.

Das erfindungsgemäße Verfahren ermöglicht außerdem die Messung von codierten beads auf der Basis von im Stand der Technik als "Quantum Dots" bekannten und ähnlichen Partikeln. Dazu werden nacheinander verschiedene Anregungswellenlängen emittiert und die Lumineszenzintensität oder Lebensdauer der Partikel gemessen. Da die beschriebenen Partikel in ihren Lumineszenzeigenschaften, d.h. ihren Anregungs- und Emissionswellenlängen beispielsweise über Größe und Materialwahl genau eingestellt werden könnten, ist es möglich, durch Kombinatorik von beispielsweise drei Anregungsfarben, drei Emissionsfarben und drei Lumineszenzlebensdauern ca. zwei hoch neun = 512 Partikel zu unterscheiden. Damit können die beschriebenen Partikel direkt verwendet werden, ohne sie in Kombinationen in beads einbauen zu müssen, wie es bei den im Stand der Technik beschriebenen Systemen notwendig ist. Auch hier kann es bevorzugt sein, die Konzentration der Probe so einzustellen, dass sich im Mittel weniger als ein Partikel in einem Meßvolumen befindet. Es kann auch bevorzugt sein, die Partikel an einer Oberfläche zu fixieren, beispielsweise an der von anderen Partikeln, insbesondere Nanopartikeln, oder auch einer planaren Oberfläche, insbesondere in Form von Arrays.

Das erfindungsgemäße Verfahren sowie die erfindungsgemäße Vorrichtung sind insbesondere zur pharmazeutischen Wirkstoffsuche (Screening), zur Identifizierung und Charakterisierung von pharmazeutisch relevanten Stoffen und Molekülen, zur Identifizierung von Analyten in diagnostischen Anwendungen, zur Genom-Analyse oder zur Reinigung und Konzentrierung von Substraten geeignet.

Nachfolgend wird die Erfindung anhand von Versuchsergebnissen sowie anhand einer bevorzugten Ausführungsform der Vorrichtung näher erläutert. Es zeigen:

Fig. 1 eine schematische Darstellung einer bevorzugten Ausführungsform der erfindungsgemäßen Vorrichtung,

Figuren 2-4 Diagramme der Fluoreszenzintensitäten einer reinen roten Farbstofflösung, die mit unterschiedlichem Lichtimpulsversatz eines roten und eines grünen Lasers bestrahlt wurde,

Figuren 5-7 Diagramme des Fluoreszenzabfalles in einem roten und einem grünen Detektionskanal bei den anhand der Figuren 2-4 beschriebenen Versuchen und

Fig. 8 ein Diagramm, in dem der Kurvenverlauf bei Kreuzkorrelationsmessungen dargestellt ist.

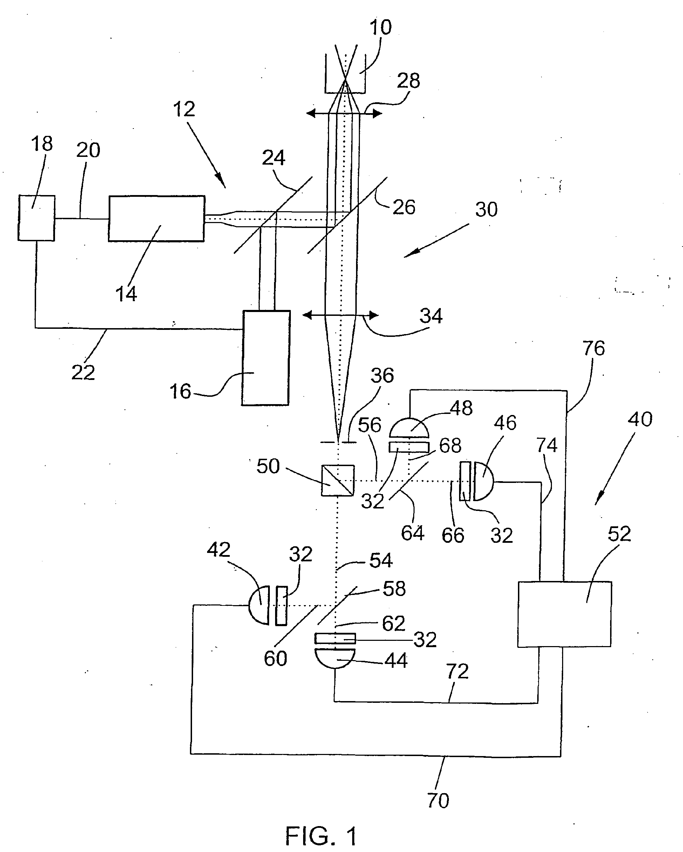

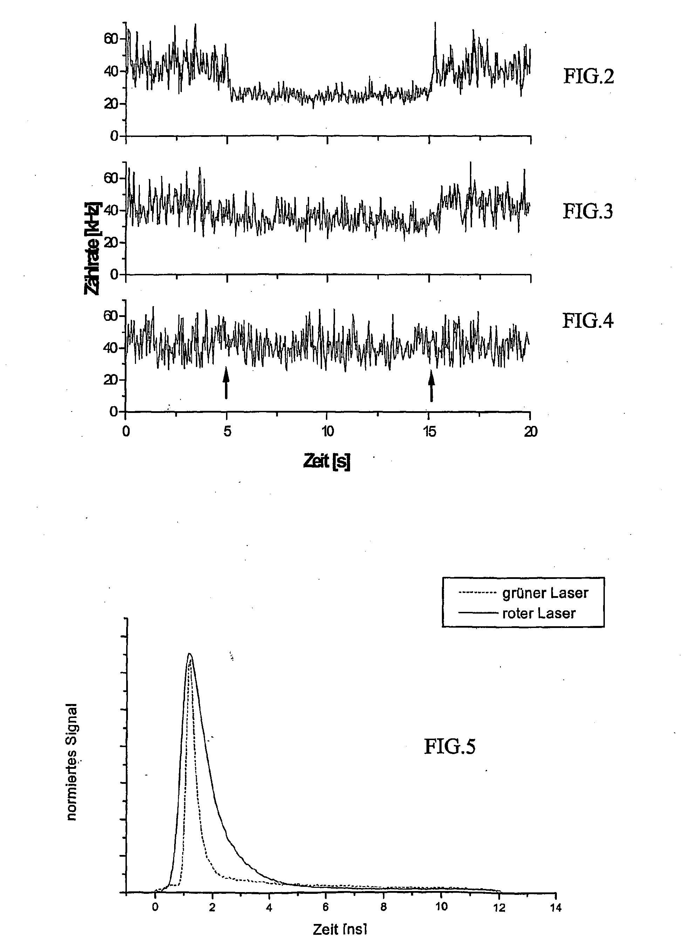

Die in Fig. 1 dargestellte bevorzugte Ausführungsform der erfindungsgemäßen Vorrichtung weist eine Probenaufnahme 10 auf. Als Probenaufnahme 10 ist schematisch ein einziger Behälter dargestellt, in dem sich die zu untersuchende Probe befindet. Bei der Probenaufnahme handelt es sich beispielsweise um Mikro- oder Nanotiterplatten. Eine als Strahlungseinheit dienende Lasereinheit 12 weist im dargestellten Beispiel einen Argon-Laser 14 auf, der grünes Laserlicht mit einer Wellenlänge von 496 nm erzeugt. Bei einem zweiten Laser 16 handelt es sich um eine rote Laserdiode, die Laserlicht mit einer Wellenlänge von 635 nm erzeugt. Beide Laser 14,16 werden in einem schnellen gepulsten Modus betrieben. Bei Einsatz der in Fig. 1 dargestellten Vorrichtung zur Durchführung der anhand der Fign. 2-8 beschriebenen Experimente betrug die Impulsfrequenz 73 MHz.

Der Argon-Laser 14 ist über einen Modenkoppler 18 gesteuert, der über ein Kabel 20 mit dem Argon-Laser 14 verbunden ist. Durch den Modenkoppler wird eine exakte Impulsfrequenz erzeugt. Der Modenkoppler 18 ist ferner über ein Triggerkabel 22 mit der roten Laserdiode 16 verbunden. Durch das Vorsehen des Modenkopplers als gemeinsame Triggereinheit ist die Impulsfrequenz der beiden Laser 14,16 identisch. Aufgrund der Länge des Triggerkabels 22 sind die von den beiden Lasern 14,16 erzeugten Impulse zueinander zeitlich versetzt. Der zeitliche Versatz tritt aufgrund der Signallaufzeit der Steuersignale von dem Modenkoppler 18 zu dem Laser 16 auf.

Die von den beiden Lasern 14,16 abgegebenen Lichtstrahlen werden über einen dichroitischen Strahlteiler 24 zusammengeführt, so dass sie einen identischen Strahlengang durchlaufen. Da die Impulse der Laser jedoch zueinander zeitlich versetzt sind, tritt keine Überschneidung der einzelnen Impulse auf. Das von dem dichroitischen Strahlteiler 24 zusammengefaßte Laserlicht wird von einem dichroitischen Spiegel 26 in Richtung der Probenaufnahme 10 gelenkt und durch ein Objektiv 28 in die in der Probenaufnahme 10 befindliche Probe fokussiert.

Das Objektiv 28 sowie der dichroitische Spiegel 26 sind bereits Bestandteile einer Optikeinheit 30. Die Optikeinheit 30 umfaßt ferner eine Tubuslinse 34 sowie eine Lochblende 36. Das von den in der Probe enthaltenen Farbstoffmarkern abgegebene Licht gelangt durch das Objektiv 28, den dichroitischen Spiegel 26 und anschließend durch die Tubuslinse 34, durch die es auf die Lochblende 36 fokussiert wird. Hierbei handelt es sich um einen typischen Aufbau eines konfokalen Mikroskops, bei dem durch die Lochblende 36 Anteile des Lichts ausgeblendet werden.

In dem dargestellten Ausführungsbeispiel der Vorrichtung umfaßt eine Detektoreinheit 40 vier optische Filter 32, vier Detektoren 42,44,46,48 sowie einen polarisierenden Strahlteiler 50 und eine Auswerteeinheit 52. Die durch die Lochblende 36 gelangenden Strahlen werden von dem polarisierenden Strahlteiler 50 in einen Strahl 54 mit parallel polarisiertem Licht und einen Strahl 56 mit senkrecht polarisiertem Licht unterteilt. Der Strahl 54 wird von einem dichroitischen Strahlteiler 58 in zwei Strahlen 60,62 geteilt, wobei einer der Strahlen das von dem roten Farbstoffmarker abgegebene Licht und der andere Strahl das von dem grünen Farbstoffmarker abgegebene Licht enthält.

Entsprechend wird der anders polarisierte Strahl 56 von einem zweiten dichroitischen Strahlteiler 64 in einen roten und einen grünen Strahl 66,68 geteilt, die von dem Detektoren 46 bzw. 48 detektiert werden. Durch die optischen Filter 32 werden beispielsweise Randbereiche des abgegebenen Lichts ausgefiltert, die nicht von den Farbstoffmarkern selbst, sondern beispielsweise vom Material der Probenaufnahme 10 herrühren. Die von den Detektoren 42,44,46,48 registrierten Strahlen 60,62,66,68 werden in elektrische Signale umgewandelt und über Leitungen 70,72,74,76 zu der Auswerteeinheit 52, bei der es sich üblicherweise um einen entsprechend an die Vorrichtung angepaßten PC handelt, geleitet. Mittels der Auswerteeinheit erfolgt eine Bestimmung der Art der Reaktion, die in der Probe stattgefunden hat.

Anstatt mit einer Optikeinheit sowohl das Laserlicht auf die Probe zu lenken und das von der Probe abgegebene Licht zur Detektoreinheit zu lenken, können auch zwei Optikeinheiten verwendet werden. Die erfindungsgemäße Vorrichtung kann so ausgestaltet sein, dass das Licht von der Strahlungseinheit zur Probenaufnahme und die von der Probe abgegebene Strahlung unter Verwendung derselben Optikeinheit zur Detektoreinheit geleitet wird, wobei sich diese ober- oder unterhalb der Probenaufnahme befinden kann. Es ist ferner möglich, dass die Vorrichtung so ausgestaltet ist, dass das Licht von der Strahlungseinheit durch eine Optikeinheit zur Probenaufnahme geleitet wird, die sich oberhalb der Probenaufnahme befindet und die von der Probe abgegebene Strahlung unter Verwendung einer weiteren Optikeinheit zur Detektoreinheit geleitet wird, die sich unterhalb der Probenaufnahme befindet.

Anstelle der in Fig. 1 dargestellten Strahlungseinheit mit zwei Lasern 14,16 kann auch eine Strahlungseinheit mit nur einer Lichtquelle verwendet werden. Um Strahlengänge mit zwei unterschiedlichen Wellenlängenbereichen zu erzeugen, ist nach der Lichtquelle ein Strahlteiler vorgesehen, der beispielsweise 50 % des erzeugten Lichts aus dem Strahlengang, unabhängig von der Frequenz des Lichts, auskoppelt. Es kann sich hierbei beispielsweise um einen schräggestellten Spiegel handeln, der 50 % des Strahlengangs abdeckt. Auf Grund von Weglängenunterschieden kann ein zeitlicher Versatz der beiden erzeugten Strahlengänge hervorgerufen werden. Hierbei ist sodann nur eine einzige gepulste Lichtquelle erforderlich. Um in den beiden Strahlengängen unterschiedliche Wellenlängenbereiche hervorzurufen, ist in einem der beiden Strahlengänge eine Einheit zur Wellenlängenänderung vorgesehen. Hierbei kann es sich beispielsweise um einen Frequenzverdoppler oder Frequenzvervielfacher handeln. Ferner kann ein OPA vorgesehen sein. Hierbei handelt es sich um einen nicht-linearen Kristall, der eine Frequenzverschiebung zur Folge hat. Ebenso kann ein Raman-Shifter vorgesehen sein, um in einem der beiden Strahlengänge den Wellenlängenbereich zu verschieben.

Bei den in den Fign. 2-7 dargestellten Messungen wurde stets eine reine rote Farbstofflösung untersucht. Es handelt sich hierbei um den Farbstoff Cyanin 5 (Cy5), der in Wasser mit einer Konzentration von 5 nM gelöst wurde. Die Fluoreszenzlebensdauer von Cy5 in Wasser beträgt 0,7 ns.

In den Fign. 2-4 ist jeweils die Zählrate des Detektors über die Zeit aufgetragen. In allen drei Versuchen wurde die Probe innerhalb der ersten 5 s ausschließlich mit dem roten Laser, im Zeitabschnitt von 5 - 15 s mit dem roten und dem grünen Laser und zwischen 15 - 20 s wiederum ausschließlich nur mit dem roten Laser bestrahlt. Die Frequenz der beiden gepulsten Laser betrug in allen drei Messungen 73 MHz.

In der in Fig. 2 dargestellten Messung wurden im Bereich von 5 - 15 s, in denen sowohl der rote als auch der grüne Laser eingeschaltet waren, kein Impulsversatz der beiden Laser vorgenommen. Die roten und grünen Laserlichtimpulse trafen somit gleichzeitig auf die Probe und auf den roten Farbstoffmarker auf. Aus dem Diagramm (Fig. 2) ist deutlich ersichtlich, dass die Zählrate in dem Bereich von 5 - 15 s stark zurückgeht. In den Bereichen, in denen der grüne Laser nicht eingeschaltet ist, d.h. in dem Bereich von 0 - 5 s sowie in dem Bereich von 15 - 20 s, ist die Zählrate deutlich höher. Hieraus wird der zerstörerische Einfluß des grünen Lasers auf die roten Farbstoffmarker ersichtlich.

Bei der Messung, die anhand von Fig. 3 dargestellt ist, wurde in dem Zeitabschnitt von 5 - 15 s ein Pulsversatz von 2 ns zwischen dem roten und dem grünen Laser eingestellt. Die Impulse des grünen Lasers erfolgten stets 2 ns nach denen des roten Lasers, wobei die beiden Laserlichtimpulse abwechselnd auf die Probe auftrafen. Wie aus dem Diagramm (Fig. 3) deutlich ersichtlich ist, ist die Zählrate in dem Bereich von 5 - 15 s deutlich höher als in dem Diagramm der zuerst durchgeführten Messung (Fig. 2). Es hat somit bereits innerhalb eines Zeitversatzes von 2 ns eine gewisse Abklingung der Erregung der roten Farbstoffmarker stattgefunden (bei Cy5 um 94 %), so dass eine erheblich geringere Anzahl von roten Farbstoffmarkern durch den grünen Laser zerstört wurde.

Besonders deutlich ist der Effekt des erfindungsgemäßen Verfahrens anhand von Fig. 4. Bei dieser Messung wurde ein Impulsversatz von 10 ns in dem Bereich von 5 - 15 s eingestellt. Es ist hierbei aus dem Diagramm keine Abweichung der Zählrate in den einzelnen Bereichen mehr ersichtlich. Es kann somit davon ausgegangen werden, dass bereits nach 10 ns annähernd sämtliche zuvor angeregten roten Farbstoffmarker wieder in ihren Grundzustand zurückgefallen sind.

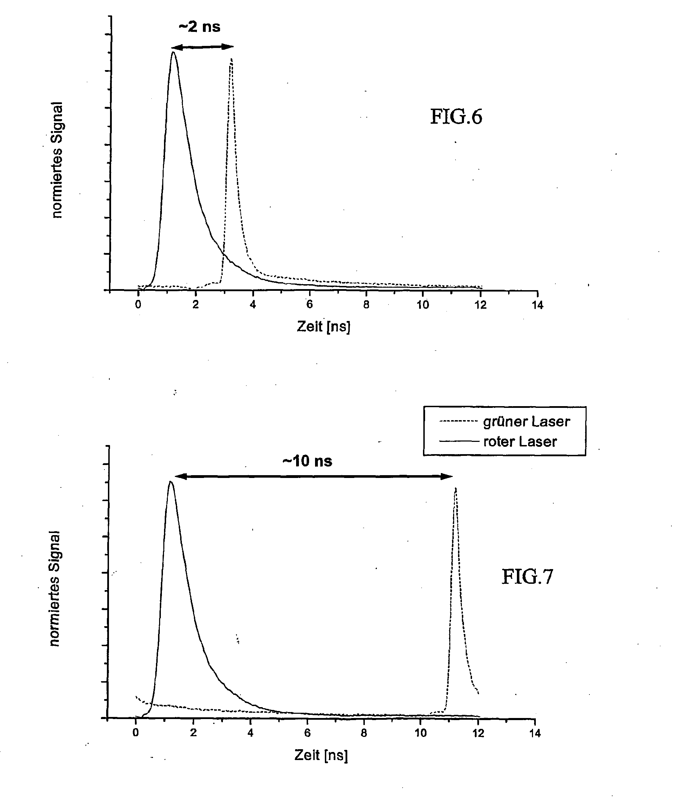

In den Fign. 5-7 ist die Zählrate eines roten und eines grünen Detektionskanals über eine Zeit abgebildet. Bei den Detektionskanälen handelt es sich um die entsprechenden Detektoren in Verbindung mit der Auswerteeinheit. Fig. 5 entspricht der in Fig. 2, Fig. 6 der in Fig. 3 und Fig. 7 der in Fig. 4 dargestellten Messung. Die durchgezogene Linie zeigt jeweils die durch den roten Laser hervorgerufene Fluoreszenz und die gestrichelte Linie die durch den grünen Laser hervorgerufene Fluoreszenz. Die in den Fign. 5-7 dargestellten Messungen wurden jeweils in dem Zeitraum von 5 - 15 s (Fign. 2-4) durchgeführt, d.h. in dem Zeitraum, in dem beide Laser angeschaltet waren. Bei Fig. 5 ist zwischen den roten und grünen Laserlichtimpulsen kein Versatz, bei Fig. 6 beträgt der Zeitversatz entsprechend Fig. 3 2 ns und bei Fig. 7 beträgt der Zeitversatz entsprechend Fig. 4 10 ns.

Aus den Fign. 5-7 ergibt sich deutlich die Verschiebung der maximalen Fluoreszenzsignale des roten und des grünen Detektionskanals zueinander aufgrund des Impulsversatzes. Bei einem Impulsversatz von 10 ns können die beiden Detektionskanäle deutlich voneinander getrennt werden. Dies ermöglicht beispielsweise den Einsatz eines einzigen Detektors für beide Farbstoffmarker, da bekannt ist, zu welchem Zeitpunkt Lichtsignale von welchem Farbstoffmarker zu dem Detektor gelangen.

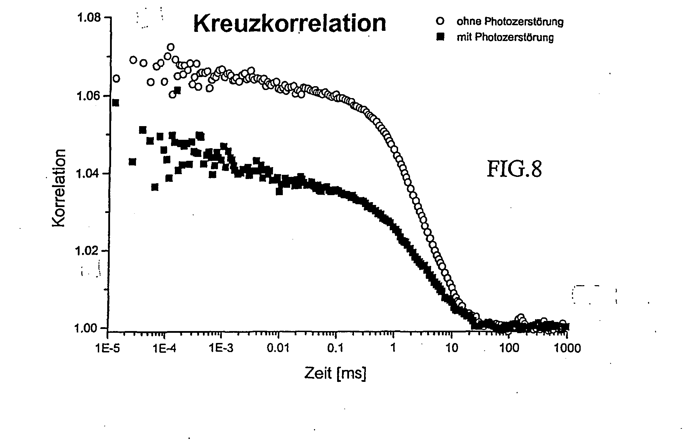

Bei dem anhand von Fig. 8 dargestellten Versuch handelt es sich um eine Messung eines mit Cy5 und Rhodamin-Green markierten doppelsträngigen Oligonukleotids, das bei einer Konzentration von ca. 1 nM in Wasser gelöst ist. Das Oligonukleotid ist 66 Basenpaare lang und macht aufgrund der Entfernung zwischen beiden Farbstoffmarkern einen Energietransfer unmöglich. Es wurde eine Kreuzkorrelationsmessung des roten und grünen Fluoreszenzlichts durchgeführt. Der rote und grüne Laser waren wiederum gepulst und zeitlich verschiebbar. Bei der unteren Kurve handelt es sich um den Verlauf der Kreuzkorrelation bei überlagerten Laserlichtimpulsen, d.h. bei Laserlichtimpulsen ohne zeitlichen Versatz. Bei der oberen Kurve waren die Laserlichtimpulse zueinander zeitlich versetzt. Nach Gl. 2 ergibt die obere Kurve eine Konzentration, $c_{grün+rot} = 1$ nM, an doppelt markierten Oligonukleotiden, während die verringerte Amplitude der unteren Kurve zu einer geringeren Konzentration, $C_{grün+rot} = 0,6$ nM, führt. Es tritt somit aufgrund des Impulsversatzes keine Photozerstörung auf und die Kreuzkorrelationsanalyse führt zu unverfälschteren Ergebnissen.

**EP 1 311 829 B1**

**Patentansprüche**

1. Verfahren zum Messen chemischer und/oder biologischer Proben mittels spektroskopischer oder mikroskopischer Verfahren, insbesondere mit Hilfe der Lumineszenzspektroskopie, wobei die Probe mindestens zwei Marker aufweist, wobei mindestens einer der mindestens zwei Marker beim Anregen in einem ersten Wellenlängenbereich und einem weiteren Anregen in einem zweiten Wellenlängenbereich photo-zerstört werden kann, bei welchem die mindestens zwei Marker aufweisende Probe in einem Meßvolumen mit elektromagnetischer Strahlung mit mindestens zwei unterschiedlichen Wellenlängenbereichen bestrahlt wird,
der angeregte Marker Strahlung in einem Emissionswellenlängenbereich abgibt und
die abgegebene Strahlung von mindestens einem Detektor detektiert wird,
**dadurch gekennzeichnet,**
**dass** durch Pulsen der zur Anregung des Markers verwendeten elektromagnetischen Strahlung in mindestens zwei unterschiedlichen Wellenlängenbereichen das Photo-Zerstören des mindestens einen der mindestens zwei Marker vermieden wird, und
die Strahlungsimpulse der einzelnen Wellenlängenbereiche zueinander derart zeitlich versetzt auf die Probe treffen, dass ein Strahlungsimpuls erst erzeugt wird, nachdem die Anregung des durch den vorherigen Strahlungsimpuls eines verschiedenen Wellenlängenbereichs angeregten Markers im Wesentlichen abgeklungen ist.

2. Verfahren nach Anspruch 1, **dadurch gekennzeichnet, dass** eine Relativbewegung zwischen Meßvolumen und mindestens einen der mindestens zwei Marker, insbesondere zwischen Meßvolumen und einem einzigen Markermolekül, in einem Relativbewegungszeitraum stattfindet, und die zur Anregung des Markers verwendete elektromagnetische Strahlung in zumindest einem Wellenlängenbereich derart gepulst wird, dass mindestens zwei Strahlungsimpulse innerhalb des Relativbewegungszeitraums, in dem das Meßvolumen den Marker erfaßt, auf den Marker auftreffen.

3. Verfahren nach Anspruch 1 oder 2, **dadurch gekennzeichnet, dass** mindestens einer der mindestens zwei Marker, insbesondere ein einzelnes Markermolekül, in einem Diffusionszeitraum durch das Meßvolumen diffundiert und die zur Anregung des Markers verwendete elektromagnetische Strahlung in zumindest einem Wellenlängenbereich derart gepulst wird, dass mindestens zwei Strahlungsimpulse innerhalb des Diffusionszeitraums auf den Marker auftreffen.

4. Verfahren nach Anspruch 1 oder 2, **dadurch gekennzeichnet, dass** mindestens einer der mindestens zwei Marker stationär ist und eine Relativbewegung zwischen Meßvolumen und Marker durch Bewegung des Meßvolumens und/oder Bewegung der den Marker enthaltenden Probenaufnahme erfolgt.

5. Verfahren nach einem der Ansprüche 1-4, **dadurch gekennzeichnet, dass** die Strahlung der einzelnen Wellenlängenbereiche in repetierender Reihenfolge abgegeben wird.

6. Verfahren nach einem der Ansprüche 1-5 **dadurch gekennzeichnet, dass** die Probe zwei Marker aufweist, wobei jeder Marker jeweils von einem Wellenlängenbereich angeregt wird.

7. Verfahren nach einem der Ansprüche 1-6, **dadurch gekennzeichnet, dass** ein roter und/oder ein grüner Farbstoffmarker zusammen mit rotem und/oder grünem Anregungslicht verwendet wird, wobei das grüne Anregungslicht vorzugsweise einen Wellenlängenbereich von 480 bis 550 nm, besonders bevorzugt von 485 bis 535 nm, und das rote Anregungslicht einen Wellenlängenbereich von vorzugsweise 630 bis 690 nm, besonders bevorzugt von 635 bis 655 nm, aufweist.

8. Verfahren nach mindestens einem der Ansprüche 1-7 **dadurch gekennzeichnet, dass** mindestens einer der mindestens zwei Marker, insbesondere ein einziges Markermolekül, eine charakteristische Ausbleichzeit aufweist, nur während der er/es Strahlung emittiert, und die zur Anregung des Markers verwendete elektromagnetische Strahlung in zumindest einem Wellenlängenbereich derart gepulst wird, dass mindestens zwei Strahlungsimpulse innerhalb des Ausbleichzeitraums auf den Marker treffen.

9. Verwendung einer Vorrichtung zum Messen chemischer und/oder biologischer Proben mittels spektroskopischer oder mikroskopischer Verfahren, mit Hilfe der Lumineszenzspektroskopie zur Durchführung des Verfahrens nach einem der Ansprüche 1-8, mit
einer Strahlungseinheit (12) zur Erzeugung von elektromagnetischer Strahlung in mindestens zwei verschiedenen Wellenlängenbereichen,

einer Probenaufnahme (10) zur Aufnahme der mindestens zwei Marker aufweisenden Probe,

einer mindestens einen Detektor (42-48) aufweisenden Detektoreinheit (40) zum Detektieren der von der Probe abgegebenen Strahlung und

mindestens einer Optikeinheit (30), die die Strahlung der Strahlungseinheit (12) zu einem Meßvolumen in der Probenaufnahme (10) und/oder die von der Probe abgegebene Strahlung zur Detektoreinheit (40) leitet,
**dadurch gekennzeichnet,**
**dass** die Strahlungseinheit (12) in mindestens zwei unterschiedlichen Wellenlängenbereichen gepulste Strahlung erzeugt, und

die Strahlungseinheit (12) zur Erzeugung der Strahlungsimpulse mit einer Steuereinheit (18) verbunden ist, wobei die Steuereinheit (18) die Strahlungsimpulse der einzelnen Wellenlängenbereiche zueinander derart zeitlich versetzt steuert, dass ein Strahlungsimpuls erst erzeugt wird, nachdem die Anregung des durch den vorherigen Strahlungsimpuls eines verschiedenen Wellenlängenbereichs angeregten Markers im wesentlichen abgeklungen ist.

10. Verwendung einer Vorrichtung nach Anspruch 9, **dadurch gekennzeichnet, dass** eine Relativbewegung zwischen Meßvolumen und mindestens einem der mindestens zwei Marker, insbesondere zwischen Meßvolumen und einem einzigen Markermolekül, in einem Relativbewegungszeitraum stattfindet, und die Strahlungseinheit derart gepulste Strahlung erzeugt, dass mindestens zwei Strahlungsimpulse innerhalb des Relativbewegungszeitraumes, in dem das Meßvolumen den Marker erfasst, auf den Marker auftreffen.

11. Verwendung einer Vorrichtung nach Anspruch 9 oder 10, **dadurch gekennzeichnet, dass** mindestens einer der mindestens zwei Marker, insbesondere ein einziges Markermolekül, in einem Diffusionszeitraum durch das Meßvolumen diffundiert und die Strahlungseinheit (12) in zumindest einem Wellenlängenbereich derart gepulste Strahlung erzeugt, dass mindestens zwei Strahlungsimpulse innerhalb des Diffusionszeitraums auf den Marker auftreffen.

12. Verwendung einer Vorrichtung nach einem der Ansprüche 9-11, **dadurch gekennzeichnet, dass** sie Mittel zur Bewegung des Meßvolumens und/oder zur Bewegung der die mindestens zwei Marker enthaltenden Probenaufnahme umfasst.

13. Verwendung einer Vorrichtung nach mindestens einem der Ansprüche 9-12 **dadurch gekennzeichnet, dass** die Steuereinheit (18) ein Modenkoppler ist.

14. Verwendung einer Vorrichtung nach einem der Ansprüche 9-13, **dadurch gekennzeichnet, dass** die Steuereinheit (18) die Strahlungsimpulse derart steuert, dass die Strahlungsimpulse der einzelnen Wellenlängenbereiche in repetierender Reihenfolge abgegeben werden.

15. Verwendung einer Vorrichtung nach einem der Ansprüche 9-14, **dadurch gekennzeichnet, dass** die Strahlungseinheit (12) mindestens zwei Strahlungsquellen, insbesondere Laser (14,16), zur Erzeugung verschiedener Wellenlängenbereiche aufweist.

16. Verwendung einer Vorrichtung nach einem der Ansprüche 9-15, **dadurch gekennzeichnet, dass** die Strahlungseinheit (12) für sämtliche Strahlungsquellen (14,16) eine gemeinsame Steuereinheit (18) aufweist.

17. Verwendung einer Vorrichtung nach Anspruch 16, **dadurch gekennzeichnet, dass** die Steuereinheit (18) mit den Strahlungsquellen (14,16) jeweils über ein Triggerkabel (20,22) verbunden ist, wobei der zeitliche Versatz der Strahlungsimpulse durch die Länge der Triggerkabel (20,22) bestimmt ist.

18. Verwendung einer Vorrichtung nach einem der Ansprüche 15-17, **dadurch gekennzeichnet, dass** die Strahlungseinheit (12) zwei Strahlungsquellen (14,16) umfasst, wobei eine Strahlungsquelle (14) rotes und die andere (16) grünes Licht erzeugt und das grüne Licht vorzugsweise in einem Wellenlängenbereich von 480 bis 550 nm, besonders bevorzugt von 485 bis 535 nm, und das rote Licht vorzugsweise in einem Wellenlängenbereich von 630 bis 690 nm, besonders bevorzugt von 635 bis 655 nm, liegt.

19. Verwendung einer Vorrichtung nach einem der Ansprüche 9-18, **dadurch gekennzeichnet, dass** die Detektoreinheit (40) nur einen mit einer Auswerteeinheit (52) verbundenen Kombinationsdetektor aufweist, wobei die Auswerteeinheit (52) die von den mindestens zwei Markern abgegebene Strahlung aufgrund des zeitlichen Versatzes getrennt voneinander auswertet.

20. Verwendung einer Vorrichtung nach einem der Ansprüche 9-19, **dadurch gekennzeichnet, dass** die Detektoreinheit (40) zwei Detektoren (42,44), insbesondere einen zum Detektieren des von roten Farbstoffmarkern und einen zum Detektieren des von grünen Farbstoffmarkern abgegebenen Lichts, aufweist.

21. Verwendung einer Vorrichtung nach mindestens einem der Ansprüche 9-20, **dadurch gekennzeichnet, dass** der Marker, insbesondere ein einzelnes Markermolekül, eine charakteristische Ausbleichzeit aufweist, nur während der er/es Strahlung emittiert, und die Strahlungseinheit (12) in zumindest einem Wellenlängenbereich derart gepulste Strahlung erzeugt, dass mindestens zwei Strahlungsimpulse innerhalb des Ausbleichzeitraums auf den Marker treffen.

**Claims**

1. A method for measuring chemical and/or biological samples by means of spectroscopic or microscopic methods, in particular using luminescence spectroscopy, wherein the sample includes at least two markers, at least one of the at least two markers being photo-destructible by excitation in a first wavelength range and another excitation in a second wavelength range, wherein

   - the sample including at least two markers is irradiated in a measuring volume with electromagnetic radiation of at least two different wavelength ranges,
   - the excited marker emits radiation in an emission wavelength range, and
   - the emitted radiation is detected by at least one detector,

   **characterized in that**

   - by pulsating the electromagnetic radiation used to excite the marker in at least two different wavelength ranges, the photo-destruction of the at least one of the at least two markers is avoided, and
   - the radiation pulses of the individual wavelength ranges impinge on the sample with a temporal offset relative to each other such that a radiation pulse is generated only after the excitation of a marker excited by the previous radiation pulse of a different wavelength range has substantially died down.

2. The method of claim 1, wherein a relative movement between the measuring volume and at least one of the at least two markers, in particular between the measuring volume and a single marker molecule, occurs in a relative movement period and the electromagnetic radiation used to excite the marker is pulsed in at least one wavelength range such that at least two radiation pulses hit the marker within the relative movement period in which the measuring volume contains the marker.

3. The method of claim 1 or 2, wherein at least one of the at least two markers, in particular a single marker molecule, diffuses through the measuring volume during a diffusion period and the electromagnetic radiation used to excite the marker is pulsed in at least one wavelength range such that at least two radiation pulses hit the marker within the diffusion period.

4. The method of claim 1 or 2, wherein at least one of the at least two markers is stationary and a relative movement between the measuring volume and the marker occurs by moving the measuring volume and/or by moving the sample receiver containing the marker.

5. The method of one of claims 1-4, wherein the radiation of the individual wavelength ranges is emitted in repetitive sequence.

6. The method of one of claims 1-5, wherein the sample includes two markers, each marker being excited by one wavelength range, respectively.

7. The method of one of claims 1-6, wherein a red and/or a green color marker are used together with red and/or green excitation light, the green excitation light having a wavelength range preferably of 480 to 550 nm, more preferred of 485 to 535 nm, and the red excitation light having a wavelength range preferably of 630 to 690 nm, more preferred of 635 to 655 nm.

8. The method of claims 1-7, wherein at least one of the at least two markers, in particular a single marker molecule, has a characteristic fading time during which only it emits radiation, and the electromagnetic radiation used to excite the marker is pulsed in at least one wavelength range such that at least two radiation pulses impinge on the marker within the fading period.

9. Use of a device for measuring chemical and/or biological samples by means of spectroscopic or microscopic methods, in particular by luminescence spectroscopy, for carrying out the method of one of claims 1-8, comprising

- an irradiation unit (12) for generating electromagnetic radiation in at least two different wavelength ranges,
- a sample receiver (10) for holding the sample including at least two markers,
- a detector unit (40) comprising at least one detector (42-48) for detecting the radiation emitted by the sample, and
- at least one optic unit (30) directing the radiation from the irradiation unit (12) to a measuring volume in the sample receiver (10) and/or directing the radiation emitted by the sample to the detector unit (40),

**characterized in that**

- the irradiation unit (12) generates radiation pulsed in at least two different wavelength ranges, and
- the irradiation unit (12) is connected with a control unit (18) to generate the radiation pulses, the control unit (18) controlling the radiation pulses of the individual wavelength ranges temporally offset from each other, such that radiation pulse is only generated after the excitation of the marker excited by the previous radiation pulse of a different wavelength has substantially decayed.

10. The use of a device of claim 9, wherein a relative movement between the measuring volume and at least one of the markers, in particular between the measuring volume and a single marker molecule, occurs in a relative movement period and the irradiation unit generates radiation that is pulsed such that at least two radiation pulses hit the marker within the relative movement period in which the measuring volume contains the marker.

11. The use of a device of claim 9 or 10, wherein at least one of the at least two markers, in particular a single marker molecule, diffuses through the measuring volume during a diffusion period and the irradiation unit (12) generates radiation pulsed in at least one wavelength range such that at least two radiation pulses hit the marker within the diffusion period.

12. The use of a device of one of claims 9-11, wherein it comprises means for moving the measuring volume and/or the sample receiver containing the at least two markers.

13. The use of a device of at least one of claims 9-12, wherein the control unit (18) is a mode coupler.

14. The use of a device of one of claims 9-13, wherein the control unit (18) controls the radiation pulses such that the radiation pulses of the individual wavelength ranges are emitted in repetitive sequence.

15. The use of a device of one of claims 9-14, wherein the irradiation unit (12) comprises at least two radiation sources, in particular lasers (14, 16), for generating different wavelength ranges.

16. The use of a device of one of claims 9-15, wherein the irradiation unit (12) comprises a common control unit (18) for all radiation sources (14, 16).

17. The use of a device of claim 16, wherein the control unit (18) is connected to the radiation sources (14, 16) through a respective trigger wire (20, 22), the time interval between the radiation pulses being defined by the length of the trigger wires (20, 22).

18. The use of a device of one of claims 15-17, wherein the irradiation unit (12) comprises two radiation sources (14, 16), one radiation source (14) generating red light and the other (16) generating green light, and wherein the green light has a wavelength range preferably of 480 to 550 nm, more preferred of 485 to 535 nm, and the red light has a wavelength range preferably of 630 to 690 nm, more preferred of 635 to 655 nm.

19. The use of a device of one of claims 9-18, wherein the detector unit (40) comprises only one combination detector connected to an evaluating unit (52), the evaluating unit (52) evaluating the radiation emitted by the at least two markers separately due to the time interval.

20. The use of a device of one of claims 9-19, wherein the detector unit (40) comprises two detectors (42, 44), in particular one for detecting the light emitted by red color markers and one for detecting light emitted by green color markers.

21. The use of a device of one of claims 9-20, wherein the marker, in particular a single marker molecule, has a characteristic fading time during which only it emits radiation, and the irradiation unit (12) generates radiation that is pulsed in at least one wavelength range and/or polarization such that at least two radiation pulses hit the marker within the fading period.

**Revendications**

1. Procédé de mesure d'échantillons chimiques et/ou biologiques par des procédés spectroscopiques ou microscopiques, en particulier à l'aide de la spectroscopie de luminescence, l'échantillon présentant au moins deux marqueurs, au moins l'un des au moins deux marqueurs pouvant être photodétruit lors de l'excitation dans une première plage de longueurs d'onde et lors d'une autre excitation dans une deuxième plage de longueurs d'onde, dans lequel l'échantillon présentant au moins deux marqueurs est irradié dans un volume de mesure par un rayonnement électromagnétique avec au moins deux plages de longueurs d'onde différentes,
le marqueur excité émet un rayonnement dans une plage de longueurs d'onde d'émission et
le rayonnement émis est détecté par au moins un détecteur,
**caractérisé en ce que**
la photodestruction d'au moins l'un des au moins deux marqueurs est évitée par la pulsation du rayonnement électromagnétique utilisé pour l'excitation du marqueur dans au moins deux plages de longueurs d'onde différents et **en ce que** les impulsions du rayonnement des différentes plages de longueurs d'onde atteignent l'échantillon de façon décalée dans le temps l'une par rapport à l'autre, de telle sorte qu'une impulsion de rayonnement est produite seulement après l'amortissement substantiel de l'excitation du marqueur excité par l'impulsion de rayonnement précédent d'une plage de longueurs d'onde différente.

2. Procédé selon la revendication 1, **caractérisé en ce qu'**un déplacement relatif entre le volume de mesure et au moins l'un des au moins deux marqueurs, en particulier entre le volume de mesure et une molécule unique de marqueur, se déroule sur une durée de déplacement relatif, et **en ce que** le rayonnement électromagnétique utilisé pour l'excitation du marqueur est pulsé dans au moins une plage de longueurs d'onde de telle sorte qu'au moins deux impulsions de rayonnement atteignent le marqueur pendant la durée de déplacement relatif durant laquelle le marqueur se trouve dans le volume de mesure.

3. Procédé selon la revendication 1 ou 2, **caractérisé en ce qu'**au moins l'un des au moins deux marqueurs, en particulier une molécule unique de marqueur, est diffusée à travers le volume de mesure sur une durée de diffusion et **en ce que** le rayonnement électromagnétique utilisé pour l'excitation du marqueur est pulsé dans au moins une plage de longueurs d'onde, de telle sorte qu'au moins deux impulsions de rayonnement atteignent le marqueur pendant la durée de diffusion.

4. Procédé selon la revendication 1 ou 2, **caractérisé en ce qu'**au moins l'un des au moins deux marqueurs est stationnaire et **en ce qu'**un déplacement relatif entre le volume de mesure et le marqueur se fait en déplaçant le volume de mesure et/ou en déplaçant le réceptacle d'échantillon contenant le marqueur.

5. Procédé selon l'une des revendications 1 à 4, **caractérisé en ce que** le rayonnement des différentes plages de longueur d'onde est émis selon un ordre répétitif.

6. Procédé selon l'une des revendications 1 à 5, **caractérisé en ce que** l'échantillon présente deux marqueurs, chaque marqueur étant respectivement excité par une plage de longueurs d'onde.

7. Procédé selon l'une des revendications 1 à 6, **caractérisé en ce qu'**un marqueur de couleur rouge et/ou un marqueur de couleur vert est/sont utilisé(s) en même temps qu'une lumière d'excitation rouge et/ou verte, la lumière d'excitation verte présentant de préférence une plage de longueurs d'onde de 480 nm à 550 nm, de façon particulièrement préférée de 485 nm à 535 nm, et **en ce que** la lumière d'excitation rouge présente une plage de longueurs d'onde de préférence de 630 nm à 690 nm, de façon particulièrement préférée de 635 nm à 655 nm.

8. Procédé selon au moins l'une des revendications 1 à 7, **caractérisé en ce qu'**au moins l'un des au moins deux marqueurs, en particulier une molécule unique de marqueur, présente une durée de décoloration caractéristique, pendant laquelle seulement il/elle émet un rayonnement, et **en ce que** le rayonnement électromagnétique utilisé pour l'excitation du marqueur est pulsé dans au moins une plage de longueurs d'onde de telle sorte qu'au moins deux impulsions de rayonnement atteignent le marqueur pendant la durée de décoloration.

**9.** Utilisation d'un dispositif de mesure d'échantillons chimiques et/ou biologiques par des procédés spectroscopiques ou microscopiques, à l'aide de la spectroscopie de luminescence, pour la mise en oeuvre du procédé selon l'une des revendications 1 à 8, avec

- une unité de rayonnement (12) destinée à la production d'un rayonnement électromagnétique dans au moins deux plages de longueurs d'onde différentes,
- un réceptacle d'échantillon (10) prévu pour recevoir l'échantillon présentant au moins deux marqueurs,
- une unité de détection (40) présentant au moins un détecteur (42-48) pour la détection du rayonnement émis par l'échantillon et
- au moins une unité optique (30) qui conduit le rayonnement de l'unité de rayonnement (12) vers un volume de mesure dans le réceptacle d'échantillon (10) et/ou le rayonnement émis par l'échantillon vers l'unité de détection (40),

**caractérisée en ce que** l'unité de rayonnement (12) produit un rayonnement pulsé dans au moins deux plages de longueurs d'onde différentes et **en ce que** l'unité de rayonnement (12) destinée à produire des impulsions de rayonnement est reliée à une unité de commande (18), l'unité de commande (18) commandant les impulsions de rayonnement des différentes plages de longueurs d'onde de façon décalée dans le temps l'une par rapport à l'autre de telle sorte qu'une impulsion de rayonnement est produite seulement après l'amortissement substantiel de l'excitation du marqueur excité par l'impulsion de rayonnement précédente d'une plage de longueurs d'onde différente.

**10.** Utilisation d'un dispositif selon la revendication 9, **caractérisée en ce qu'**un déplacement relatif entre le volume de mesure et au moins l'un des au moins deux marqueurs, en particulier entre un volume de mesure et une molécule unique de marqueur, se déroule pendant une durée de déplacement relatif, et **en ce que** l'unité de rayonnement produit un rayonnement pulsé de telle sorte qu'au moins deux impulsions de rayonnement atteignent le marqueur pendant la durée de déplacement relatif durant laquelle le marqueur se trouve dans le volume de mesure.

**11.** Utilisation d'un dispositif selon la revendication 9 ou 10, **caractérisée en ce qu'**au moins l'un des au moins deux marqueurs, en particulier une molécule unique de marqueur, est diffusée dans le volume de mesure pendant une durée de diffusion et **en ce que** l'unité de rayonnement (12) produit un rayonnement pulsé dans au moins une plage de longueurs d'onde de telle sorte qu'au moins deux impulsions de rayonnement atteignent le marqueur pendant la durée de diffusion.

**12.** Utilisation d'un dispositif selon l'une des revendications 9 à 11, **caractérisée en ce qu'**elle comprend des moyens pour déplacer le volume de mesure et/ou pour déplacer le réceptacle d'échantillon contenant au moins deux marqueurs.

**13.** Utilisation d'un dispositif selon au moins l'une des revendications 9 à 12, **caractérisée en ce que** l'unité de commande (18) est un coupleur de modes.

**14.** Utilisation d'un dispositif selon l'une des revendications 9 à 13, **caractérisée en ce que** l'unité de commande (18) commande les impulsions de rayonnement de telle sorte que les impulsions de rayonnement des différentes plages de longueurs d'onde sont émises selon un ordre répétitif.

**15.** Utilisation d'un dispositif selon l'une des revendications 9 à 14, **caractérisée en ce que** l'unité de rayonnement (12) présente au moins deux sources de rayonnement, en particulier un laser (14, 16), pour produire différentes plages de longueurs d'onde.

**16.** Utilisation d'un dispositif selon l'une des revendications 9 à 15, **caractérisée en ce que** l'unité de rayonnement (12) présente une unité de commande (18) commune pour l'ensemble des sources de rayonnement (14, 16).

**17.** Utilisation d'un dispositif selon la revendication 16, **caractérisée en ce que** l'unité de commande (18) est reliée aux sources de rayonnement (14, 16) respectivement par un câble de déclenchement (20, 22), le décalage temporel des impulsions de rayonnement étant déterminé par la longueur du câble de déclenchement (20, 22).

**18.** Utilisation d'un dispositif selon l'une des revendications 15 à 17, **caractérisée en ce que** l'unité de rayonnement (12) comprend au moins deux sources de rayonnement (14,16), une source de rayonnement (14) produisant une lumière rouge et l'autre source de rayonnement (16) produisant une lumière verte, la lumière verte se situant de préférence dans une plage de longueurs d'onde de 480 nm à 550 nm, de façon particulièrement préférée de 485 nm à 535 nm, et la lumière rouge se situant de préférence dans une plage de longueurs d'onde de 630 nm à 690 nm, de façon particulièrement préférée de 635 nm à 655 nm.

**19.** Utilisation d'un dispositif selon l'une des revendications 9 à 18, **caractérisée en ce que** l'unité de détection (40) ne présente qu'un détecteur combiné relié à une unité d'exploitation (52), l'unité d'exploitation (52) exploitant, de façon séparée l'un de l'autre, le rayonnement émis par les au moins deux marqueurs, à partir du décalage temporel.

**20.** Utilisation d'un dispositif selon l'une des revendications 9 à 19, **caractérisée en ce que** l'unité de détection (40) présente deux détecteurs (42, 44), l'un en particulier pour la détection de la lumière émise par les marqueurs de couleur rouges et l'autre pour la détection de la lumière émise par les marqueurs de couleur verts.

**21.** Utilisation d'un dispositif selon au moins l'une des revendications 9 à 20, **caractérisée en ce que** le marqueur, en particulier une molécule unique de marqueur, présente une durée de décoloration caractéristique, pendant laquelle seulement il/elle émet un rayonnement, et **en ce que** l'unité de rayonnement (12) produit un rayonnement pulsé dans au moins une plage de longueurs d'onde, de telle sorte qu'au moins deux impulsions de rayonnement atteignent le marqueur pendant la durée de décoloration.

FIG. 1

EP 1 311 829 B1

FIG.2

FIG.3

FIG.4

Zeit [s]

grüner Laser
roter Laser

FIG.5

Zeit [ns]

21

FIG.6

grüner Laser
roter Laser

FIG.7

FIG.8

**EP 1 311 829 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9416313 A
- US 5748157 A

- WO 9627798 A